# EUROPEAN PATENT SPECIFICATION

(11) **EP 2 980 184 B1**
(45) Date of publication and mention of the grant of the patent: **01.08.2018**
(21) Application number: 14776114.2
(22) Date of filing: 26.03.2014
(51) Int. Cl.: C09K 11/64, C08K 3/24, C08L 101/00

(54) **USE OF A MECHANOLUMINESCENT MATERIAL**
VERWENDUNG EINES MECHANOLUMINESZIERENDEN MATERIALS
UTILISATION DE MATIÈRE MÉCANOLUMINESCENTE

(30) Priority: 29.03.2013 JP 2013074268; 29.03.2013 JP 2013074422
(43) Date of publication of application: 03.02.2016
(73) Proprietor: Sakai Chemical Industry Co., Ltd., Sakai-shi, Osaka 590-8502 (JP); National Institute of Advanced Industrial Science and Technology, Tokyo 100-8921 (JP)
(72) Inventor: MORI, Kenji, Sakai-shi Osaka 590-0985 (JP); KOBAYASHI, Keita, Sakai-shi Osaka 590-0985 (JP); NAKAO, Hiroshi, Sakai-shi Osaka 590-0985 (JP); TOJO, Tomonori, Sakai-shi Osaka 590-0985 (JP); XU, Chao-Nan, Tosu-shi Saga 841-0052 (JP)
(74) Representative: Hart-Davis, Jason
(86) International application number: PCT/JP2014/058533
(87) International publication number: WO 2014/157337

(56) References cited:
- WO-A1-2006/016567
- WO-A1-2006/109704
- JP-A- 2001 107 039
- JP-A- 2001 152 145
- JP-A- 2002 371 275
- JP-A- 2005 179 399
- JP-A- 2010 180 280
- JP-A- 2011 246 662
- US-A1- 2002 086 190

## Description

### TECHNICAL FIELD

The present invention relates to mechanoluminescent material use applications.

### BACKGROUND ART

Luminescent materials are known as materials that emit visible light at around room temperature in response to external stimuli. In particular, materials that emit light in response to mechanical stimuli such as force applied from the outside (e.g., compression, displacement, friction, impact) are called mechanoluminescent materials.

For example, Patent Literature documents 1 and 2 report mechanoluminescent materials based on an aluminate. However, conventional mechanoluminescent materials have never achieved a mechanoluminescence intensity suited to practical use, and thus mechanoluminescent materials that can achieve higher mechanoluminescence intensity are desired.

### CITATION LIST

### - Patent Literature

Patent Literature 1: JP 3511083 B
Patent Literature 2: JP 5007971 B
Patent Literature 3: JP H05-170449 A

JP 2010-180280 A shows a laminate using a mechanoluminescent material with alumina.

### SUMMARY OF INVENTION

### - Technical Problem

The present invention aims to provide a use of a material as a mechanoluminescent material which is excellent in mechanoluminescent properties and which can achieve a mechanoluminescence intensity sufficiently suited to practical use for a mechanoluminescent article or coating composition.

### - Solution to Problem

A combination use of europium (Eu), which is used as an activator for a mechanoluminescent material containing strontium aluminate as a base material, with a specific amount of at least one element selected from the group consisting of neodymium (Nd), dysprosium (Dy), and holmium (Ho) as a co-activator leads to a significantly high mechanoluminescence intensity, thereby completing the present invention.

The inventors have further focused on alumina which is a raw material of the mechanoluminescent material. The most thermally stable crystal phase of alumina is α-alumina (for example, see Patent Literature 3), and this α-alumina has low reactivity due to its thermal stability. A mechanoluminescent material made from α-alumina as a raw material insufficiently includes lattice defects, which are required for achieving a mechanoluminescent mechanism, in its crystal structure. In contrast, a mechanoluminescent material made from intermediate alumina other than α-alumina or a precursor thereof, i.e., aluminum hydroxide, as a raw material includes a required number of lattice defects because metal ions which serve as center ions of defect centers are incorporated into the crystal structure of the base material. A mechanoluminescent material can achieve higher mechanoluminescence intensity than that made from α-alumina as a raw material. Finally, the inventors have found a more preferable structure of the present invention.

The invention is defined in the claims.

Specifically, a first aspect not of the present invention relates to a mechanoluminescent material including strontium aluminate as a base material, a Eu ion, and at least one ion selected from the group consisting of Nd, Dy, and Ho, an amount of the Eu ion contained in the mechanoluminescent material being 0.0001 to 0.01 mol per mole of the strontium aluminate, and an amount of the at least one ion selected from the group consisting of Nd, Dy, and Ho contained in the mechanoluminescent material is, as the sum of amounts of the three ions Nd, Dy, and Ho, 0.0001 to 0.01 mol per mole of the strontium aluminate. The Eu ion acts as an activator, and the at least one ion selected from the group consisting of Nd, Dy, and Ho acts as a co-activator.

In one preferable embodiment, the amount of the Eu ion contained in the mechanoluminescent material is 0.0005 to 0.005 mol per mole of the strontium aluminate, and the amount of the at least one ion selected from the group consisting of Nd, Dy, and Ho contained in the mechanoluminescent material is, as the sum of the amounts of the three ions Nd, Dy, and Ho, 0.0005 to 0.005 mol per mole of the strontium aluminate.

The strontium aluminate is synthesized from a strontium source and one or both of an alumina raw material and aluminum hydroxide, the alumina raw material containing at least one alumina species selected from the group consisting of θ-alumina and η-alumina, the one or both of alumina and aluminum hydroxide containing 90 mol% or less of α-alumina.

Usable are a mechanoluminescent coating composition and a resin composition each containing the mechanoluminescent material, and applied products such as a mechanoluminescent article formed from the resin composition.

### - Advantageous Effects

A mechanoluminescent material including strontium aluminate as a base material and europium (Eu) as an activator in combination with at least one element selected from the group consisting of neodymium (Nd), dysprosium (Dy), and holmium (Ho) as a co-activator each in a specific amount can achieve a significantly higher mechanoluminescence intensity even with a smaller amount of the co-activator in comparison with conventional ones including no co-activator or an element other than the above three elements as a co-activator.

### BRIEF DESCRIPTION OF THE DRAWINGS

Fig. 1 is a graph showing the results of comparing the effects of co-activators in the case of using an activated alumina raw material.
Fig. 2 is a graph showing the results of comparing the effects of co-activators in the case of using an α-alumina raw material.

### DESCRIPTION OF EMBODIMENTS

### <Definition of terms>

For the following description, the terms used herein are mentioned below. The term "mechanoluminescent material" used in the Description, Claims, and Abstract (hereinafter, referred to as the "Descriptions and other documents") of the present application means a material itself that emits light in response to mechanical stimuli by force applied from the outside (e.g., compression, displacement, friction, impact). An article produced by shaping such a mechanoluminescent material alone or in combination with another material (e.g., resin) is called a "mechanoluminescent article".

The term "raw material composition for a mechanoluminescent material" in the Description means a mixture which contains a component to serve as a raw material of a mechanoluminescent material and which itself shows no mechanoluminescent performance.

### <Mechanoluminescent material>

The mechanoluminescent material which is the first aspect is described below. This mechanoluminescent material includes strontium aluminate as a base material, a Eu ion, and at least one ion selected from the group consisting of Nd, Dy, and Ho. The material containing both the Eu ion and the at least one ion selected from the group consisting of Nd, Dy, and Ho can achieve a higher mechanoluminescence intensity than conventional strontium aluminate-based mechanoluminescent materials.

The strontium aluminate is a compound usually represented by SrₓAl_{y}O_{z}, wherein 0 < X, 0 < y, and 0 < Z. Nonlimiting specific examples of the strontium aluminate include compounds such as SrAl₂O₄, SrAl₄O₇, Sr₄Al₁₄O₂₅, SrAl₁₂O₁₉, and Sr₃Al₂O₆. A material prepared by adding Eu as an activator and at least one ion selected from the group consisting of Nd, Dy, and Ho as a co-activator to this strontium aluminate is the mechanoluminescent material. The composition thereof can be represented by the formula: SrₓAl_{y}O_{z}:Eu, M (wherein 0 < X, 0 < y, 0 < Z, and M is at least one selected from the group consisting of Nd, Dy, and Ho) .

The mechanoluminescent material contains a europium (Eu) ion. The Eu ion serves as an activator. The amount of the Eu ion contained in the mechanoluminescent material is not particularly limited, and it is 0.0001 to 0.01 mol, preferably 0.0005 to 0.01 mol, and more preferably 0.0005 to 0.005 mol, per mole of the strontium aluminate. Too small an amount of the Eu ion may fail to provide a sufficient mechanoluminescence intensity, whereas too large an amount thereof may affect other physical properties while the mechanoluminescence intensity is saturated.

The mechanoluminescent material contains at least one ion selected from the group consisting of Nd, Dy, and Ho. These ions each serve as a co-activator of the Eu ion. The amounts of Nd, Dy, and Ho ions contained in the mechanoluminescent material are not particularly limited, and the sum of the amounts of the three ions Nd, Dy, and Ho is 0.0001 to 0.01 mol, preferably 0.0005 to 0.01 mol, and more preferably 0.0005 to 0.005 mol, per mole of the strontium aluminate. Too small amounts of these ions may fail to provide a sufficient mechanoluminescence intensity, whereas too large amounts thereof may affect other physical properties while the mechanoluminescence intensity decreases. Conventional techniques have also used these metal ions, but have failed to achieve a sufficient mechanoluminescence intensity. On the contrary, the mechanoluminescent material can have a significantly improved mechanoluminescence intensity by adjusting the amount of the Eu ion and the amount of the at least one ion selected from the group consisting of Nd, Dy, and Ho as mentioned above.

As long as the mechanoluminescent material contains at least one ion selected from the group consisting of Nd, Dy, and Ho, it may further contain another co-activator. Any co-activator may be used, and examples thereof include compounds or ions of rare-earth elements other than the above elements. Examples thereof include one or more elements selected from Sc, Y, La, Ce, Pr, Pm, Sm, Gd, Tb, Er, Tm, Yb, Lu, and the like. Examples of the compounds to be added in practical use include carbonates, oxides, chlorides, sulfates, nitrates, acetates, and the like of the above elements. The amounts of these compounds or ions can appropriately be adjusted on the basis of the conventional knowledge or through usual experiments.

The strontium aluminate serving as the base material is synthesized from a strontium source and an alumina raw material or aluminum hydroxide, the alumina raw material containing at least one alumina species selected from θ-alumina and η-alumina,. The term "alumina" usually refers to α-alumina which is inexpensive and used for various purposes. Nevertheless, use of an activated alumina, such as θ-alumina, or aluminum hydroxide as a raw material can lead to a higher mechanoluminescence intensity than use of α-alumina.

Next described is the raw material composition for a mechanoluminescent material suitably used as a component serving as a raw material of such a mechanoluminescent material.

### <Raw material composition for mechanoluminescent material>

This composition is a composition serving as a raw material for synthesizing a europium-activated strontium aluminate-based mechanoluminescent material including a strontium source and one or both of alumina and aluminum hydroxide. The one or both of alumina and aluminum hydroxide contained in the composition contains not more than a specific amount of α-alumina; In other words, the proportion of α-alumina in the sum of the amounts of alumina and aluminum hydroxide is 90 mol% or less.

The rest consists of other alumina species having a crystal phase different from the crystal phase of α-alumina or aluminum hydroxide.

Preferably used as such other alumina species is an alumina species having a crystal phase different from the crystal phase of α-alumina, and specifically at least one alumina species selected from the group consisting of θ-aluminaand η-alumina. Since these alumina species have high reactivity, they are also referred to as "activated alumina" in comparison with α-alumina, which is stable. In particular, θ-alumina and η-alumina are used as other alumina species because a mechanoluminescent material produced therefrom shows high luminescence performance.

As mentioned above, the amount of α-alumina in the sum of the amounts of the one or both of alumina and aluminum hydroxide is 90 mol% or less. This amount is preferably 50 mol% or less, and more preferably 30 mol% or less. The above alumina is more preferably an alumina substantially free from α-alumina (for example, containing 5 mol% or less of α-alumina). This is because the mechanoluminescence intensity of the mechanoluminescent material tends to increase as the amount of the α-alumina decreases. The lower limit of the proportion of the α-alumina is, needless to say, 0 mol%. The proportion of the α-alumina in the sum of the amounts of alumina and aluminum hydroxide can be determined by X-ray diffraction, for example. The quantified value can be calculated from the result of qualitative analysis by the X-ray diffraction by, for example, whole pattern fitting (WPF).

In contrast, any aluminum hydroxide species can be used. Examples thereof include crystal-phase aluminum hydroxide species such as gibbsite, bayerite, and boehmite.

The strontium aluminate to serve as a base material of the mechanoluminescent material can be formed by reacting the one or both of alumina and aluminum hydroxide and a strontium compound. Thus, the raw material composition for a mechanoluminescent material contains a strontium compound. Nonlimiting examples of the strontium compound include strontium carbonate, strontium oxide, strontium hydroxide, strontium halides (e.g., strontium chloride), strontium sulfate, strontium nitrate, and strontium hydrogen phosphate.

The raw material composition is a composition for synthesizing a europium-activated strontium aluminate-based mechanoluminescent material. Thus, the raw material composition usually contains a europium (Eu) ion or a europium compound as an activator. Nonlimiting examples of the europium compound include europium carbonate, europium oxide, europium chloride, europium sulfate, europium nitrate, and europium acetate.

The composition further contains the aforementioned co-activator containing at least one ion selected from the group consisting of Nd, Dy, and Ho, and may contain another co-activator.

Examples of compounds of rare-earth elements to be added to the composition include carbonates, oxides, chlorides, sulfates, nitrates, and acetates of the elements.

The composition may further contain a dispersant for improving the dispersibility of particles. Nonlimiting examples of the dispersant include anionic surfactants and nonionic surfactants. Examples of the anionic surfactants include ammonium polycarboxylate, sodium polycarboxylate, and sodium hexametaphosphate. Examples of the nonionic surfactants include polyoxyethylene alkyl ethers, polyoxyethylene hydrogenated castor oil, polyoxyethylene mono fatty acid esters, and polyoxyethylene sorbitan mono fatty acid esters. These may be used alone or in combination of two or more.

The composition may further contain a flux component for improving the crystallinity of particles. Nonlimiting examples of the flux component include compounds such as calcium fluoride, magnesium fluoride, aluminum fluoride, ammonium fluoride, sodium chloride, potassium chloride, lithium chloride, ammonium bromide, ammonium iodide, potassium iodide, sodium hydroxide, potassium hydroxide, ammonium sulfate, sodium sulfate, potassium sulfate, sodium nitrate, ammonium nitrate, boric acid, and sodium borate. These may be used alone or in combination of two or more.

Mixing of these components can provide a raw material composition for a mechanoluminescent material. The mixing can be achieved with any mixer, including known mixers. For efficient mixing, it is preferred to perform wet mixing in a reaction vessel provided with a grinding-media-stirring grinder in the presence of a dispersion medium (e.g., water). The grinding-media-stirring grinder herein means a grinder in which grinding media are put into a grinding container together with a material to be ground and the grinding container fluctuate or rotate or revolve so that the contents are stirred, or the grinding media are directly stirred in a stirring part, thereby achieving grinding. The grinding-media-stirring grinder may be any grinder, and it is preferably one selected from the group consisting of planetary mills, bead mills, and vibrating mills. Particularly preferred are planetary mills which involve rotation and revolution. The wet mixing is followed by removal of the dispersion medium and drying of the product, and thereby a raw material composition for a mechanoluminescent material can be produced.

Specifically, the following steps (1) to (3) in one example of a method for producing a mechanoluminescent material to be mentioned later can provide a raw material composition for a mechanoluminescent material.

### <Method for producing mechanoluminescent material>

A method for producing the mechanoluminescent material from one or both of alumina and aluminum hydroxide as raw material(s), the alumina containing alumina species other than α-alumina at least one selected from θ-alumina and η-alumina.

One example of the production method is a method including the steps of:
(1) charging a reaction vessel with one or both of water and an organic solvent, an alumina raw material, a strontium source, a europium source, and a compound of at least one element selected from the group consisting of Nd, Dy, and Ho;
(2) mixing a mixture of the raw materials in the reaction vessel to provide slurry;
(3) removing the one or both of water and an organic solvent from the resulting slurry to isolate a solids content; and
(4) calcining the isolated solids content to provide a mechanoluminescent material.

The step (1) is a step of charging a reaction vessel with raw materials of a mechanoluminescent material. The strontium aluminate to be a base material can be produced by reacting an alumina raw material and a strontium compound which serves as a strontium source. The alumina raw material may be any material.

The strontium compound may be any compound, and examples thereof include strontium carbonate, strontium oxide, strontium hydroxide, strontium halide (e.g., strontium chloride), strontium sulfate, strontium nitrate, and strontium hydrogen phosphate.

The Eu compound, i.e., a source of europium (Eu) which serves as an activator, may be any compound, and examples thereof include europium carbonate, europium oxide, europium chloride, europium sulfate, europium nitrate, and europium acetate.

The source compounds of Nd, Dy, and Ho which serve as co-activators may be any compounds, and examples thereof include carbonates, oxides, chlorides, sulfates, nitrates, and acetates of Nd, Dy, and Ho.

In addition to Nd, Dy, and Ho, still another co-activator may be contained. Any co-activator may be used, and examples thereof include compounds of one or more of Sc, Y, La, Ce, Pr, Pm, Sm, Gd, Tb, Er, Tm, Yb, Lu, and other elements, such as carbonates, oxides, chlorides, sulfates, nitrates, and acetates of these elements.

To the charged raw materials may be further added a dispersant for improving the dispersibility of particles. Any dispersant may be used, and examples thereof include anionic surfactants and nonionic surfactants. Examples of the anionic surfactants include ammonium polycarboxylate, sodium polycarboxylate, and sodium hexametaphosphate. Examples of the nonionic surfactants include polyoxyethylene alkyl ethers, polyoxyethylene hydrogenated castor oil, polyoxyethylene mono fatty acid esters, and polyoxyethylene sorbitan mono fatty acid esters. These may be used alone or in combination of two or more.

To the charged raw materials may be further added a flux component for improving the crystallinity of particles. Any flux component may be used, and examples thereof include compounds such as calcium fluoride, magnesium fluoride, aluminum fluoride, ammonium fluoride, sodium chloride, potassium chloride, lithium chloride, ammonium bromide, ammonium iodide, potassium iodide, sodium hydroxide, potassium hydroxide, ammonium sulfate, sodium sulfate, potassium sulfate, sodium nitrate, ammonium nitrate, boric acid, and sodium borate. These may be used alone or in combination of two or more.

The raw materials are charged into one or both of water and an organic solvent. Any organic solvent may be used, and examples thereof include water-soluble organic solvents such as alcohols (e.g., methanol, ethanol, isopropyl alcohol, and ethylene glycol) and ketones (e.g., acetone and methyl ethyl ketone). Another dispersion medium may be contained to the extent that it does not deteriorate the use of the present invention.

Next, the raw materials charged in the reaction vessel are mixed to provide slurry (step (2)). The reaction vessel may be any reaction vessel having a stirring function which allows for appropriate mixing of raw materials. In particular, a reaction vessel provided with a grinding-media-stirring grinder is preferred for efficient mixing. The grinding-media-stirring grinder herein means a grinder in which grinding media are put into a grinding container together with a material to be ground and the grinding container fluctuate or rotate or revolve so that the contents are stirred, or the grinding media are directly stirred in a stirring part, thereby achieving grinding. The grinding-media-stirring grinder may be any grinder, and it is preferably one selected from the group consisting of planetary mills, bead mills, and vibrating mills. Particularly preferred are planetary mills which involve rotation and revolution.

Thereafter, the one or both of water and an organic solvent charged as dispersion media are removed from the resulting slurry, and the remains are dried and purified as needed. Thereby, solids content is isolated (step (3)).

The resulting solids content is further calcined and ground, and then the size distribution of the particles is adjusted as needed. Thereby, the mechanoluminescent material described as the first aspect is provided (step (4)). The calcining can be performed under any conditions by a usual calcining method. For example, the resulting solids content is calcined at 1000°C or higher under reduction atmosphere.

### <Examples of applications>

The mechanoluminescent material is physically and chemically stable under various conditions. When the mechanoluminescent material is deformed by external mechanical force, the carriers of lattice defects or those of lattice defects and luminescence centers are excited, and then the material emits light when the carriers return to the ground state. A mechanoluminescent article produced by shaping such a mechanoluminescent material can be used under various conditions. It can emit light by external mechanical force in the air, in vacuum, or under reduction or oxidation conditions, of course, or in various solution environments such as in water, in an inorganic solution, or in an organic solution. Therefore, the mechanoluminescent article is useful for stress detection under various conditions.

Uses of such a mechanoluminescent material are defined in the claims.

Formation of a luminescent layer containing the mechanoluminescent material on the exterior surface of regular paper, synthetic paper, polymeric materials (e.g., epoxy resin, polyethylene, polyethylene terephthalate, polyester, polypropylene, polyvinyl chloride), natural or synthetic rubber, glass, ceramics, metal, wood, artificial or natural fibers, and concrete, combination thereof, and processed articles thereof, or containing of the mechanoluminescent material allows for detection of unusual conditions and testing of deterioration of various structures and components by application of a shock wave (stress-strain detection, stress distribution measurement). Examples of the structures and components include large structures such as high-rise buildings, viaducts, bridges, roads, railway rails, pillars, towers, pipelines, and tunnels; building materials such as flooring, tiles, wall materials, blocks, paving materials, wood, steel, and concrete; power transmission members such as gears and cams; exterior parts or internal parts (e.g., engine parts, tires, belts) for bicycles, automobiles, trains, ships, and aircraft; bearing parts, bearing cages, and photosensor-integrated bearings; and fixing parts such as screws, bolts, nuts, and washers. With respect to the applications thereof, it is expected to detect liquid leakage of batteries, valve seats, water pipes, sprinkler heads, and nonaqueous electrolyte secondary batteries into which an electrolytic solution or a polymer electrolyte was charged. Further, the mechanoluminescent material may be contained in adhesive. The stress distribution in the layer of such adhesive can be visualized, which makes it possible to find cracks in the adhesive.

Those including the mechanoluminescent material as a light-emitting element can be utilized for electronic or other devices such as pressure sensitive devices, touch pads, touch sensors, photodiodes or phototransistors, piezoelectric actuators or electrostatic actuators, light-emitting polymeric actuators, liquid level detectors, impulsive force detectors, optical waveguides, optical waveguide devices, mechanical optical devices, detectors, information processing devices, switches, operation buttons, input devices, and key entry devices. They enable wireless control, automation, and remote control of devices and systems. Examples thereof include devices for measuring the heights of connectors of semiconductor components, devices for measuring the amount of generated cavitation, devices for measuring sound pressure distribution, devices for measuring sound pressure distribution and energy density distribution by ultrasonic waves for medical tests, devices for measuring stress-strain distribution applied to an implant or other component mounted on a natural or artificial bone, transmission lines, transmitter and laser processing devices, devices for detecting the amount of torsion of a steering shaft, radiographic devices which specify the position of a part to be photographed, flow velocimeters, devices for checking the degree of parallelism of a press die, solid-state image sensing devices capable of taking a picture by generating a stress corresponding to the heat energy of infrared light, light-emitting heads which convert an external mechanical force such as frictional force, shearing force, impulsive force, or pressure into an optical signal and transmits this optical signal, remote-switching systems which enable remote control of machinery utilizing the light-emitting head, and detection systems for detecting a couple of forces utilizing the light-emitting head, removable-item detectors which can detect the attached or detached state of an item removably attached to the body of an electric, electronic, mechanical, or the like device, such as an ink cartridge or paper feed tray of an inkjet printer, and such removable items; imprinting devices capable of testing ultraviolet-cured resin remained in a protruding or recessed portion in a short time, wireless controllers, small wireless light sources (mechanoluminescent particles) to be used in vivo or in a dark place, testing devices equipped therewith, testing methods, and stress history recording systems. Further, those including the mechanoluminescent material can also be utilized for measurement of the sealability of gaskets and packing, measurement of the shape of the contact patch or contact pressure distribution of a tire, measurement of dental occlusal force, tools for measuring the contact patch of a tire, and methods of measuring the amount of generated cavitation.

The mechanoluminescent material can also be applied to tactile sensor elements. Examples thereof include human-friendly robots, artificial arms, artificial fingers, and artificial limbs, palpation devices for diagnosis, and hardness/softness testers for various industries. Still other applications are expected, such as measurement of the radioactive exposure dose and the exposure intensity distribution by measuring the light-emitting energy generated by the interaction with radiation.

In addition to the aforementioned measurement devices, the mechanoluminescent material can also be applied to lighting equipment and indications for safety. Examples thereof include lighting equipment such as device-vibration-powered lamps and wind-powered lamps; devices for marks, signs, and indications of emergency, unusualness alarming, emergency goods, danger, emergency light, emergency signals, and lifesaving equipment; safety fences, ropes put around factory buildings, and animal repellent fences; linear materials for joints half-embedded in steps of stairs, handrails, and passages; health equipment and walking-assist devices (e.g., walking-assist sticks, luminous alarm antennas); fashion accessories such as earrings and necklaces; flag poles, crossing gates of railroad crossings, exterior parts and internal parts of bicycles, automobiles, trains, ships, and aircraft, fishing tackle (e.g., artificial baits, fishing rods, nets for fish-luring; luminous fiber structures, luminous fishing equipment, fishing lines, fishing nets), buoy; position indicators for humans, pets such as dogs and cats, and livestock such as cattle, pigs, sheep, and fowl; fans (e.g., fans for wind power generators, electric fans), clothes (e.g., shoes, sports clothing, artificial luminous clothes, artificial luminous thread, artificial luminous fibers); packaging materials (e.g., boxes, holders, containers, envelopes, cartons, outer coverings, outer films), medical supplies (e.g., breathing-assist devices, experimental and research equipment), and robots (artificial luminous hair structures, artificial luminous skins, artificial luminous bodies).

Examples of applications of paint compositions, ink compositions, adhesives, and surface-coating agents containing a mechanoluminescent material include mails such as crimped postcards including pasting adhesive containing a mechanoluminescent material used in, for example, financial institutions, public institutions, credit card companies, and the distribution business; furniture such as chairs and beds; building materials such as flooring, tiles, wall materials, blocks, paving materials, wood, steel, and concrete, automotive navigation systems mounted on vehicles; controllers for audio equipment or air conditioners; input devices for home electrical appliances, portable devices, or computers; image storage means such as digital cameras, CCD cameras, films, pictures, and videotapes.

Luminescence can lead to novel designs, and thus the mechanoluminescent material can be applied to amusement merchandise such as toys and event merchandise and household goods. Examples of such applications include moving toys, kites, streamers of koinobori, swings, roller coasters, merry-go-rounds, bows and arrows; luminous devices without power sources capable of simultaneously generating sound and light by wind power (e.g., wind-bells); luminous balls (e.g., golf balls, baseballs, table tennis balls, billiard balls) and pinwheels with a luminous mechanism; balloons; those having paper-made sheet-like structures such as party horns, origami, paper balloons, harisen (slapping fans), greeting cards, and picture books; sports equipment (e.g., poles for pole vaulting, long tools such as fencing swords, bows, and arrows); pressure-sensitive seals for checking the hitting point on a golf club, line tape for tennis courts, movable decorations, movable sculpture, movable monuments; movable display devices; impact-luminescent decoration devices; audio equipment such as loudspeakers, musical instruments (e.g., string instruments such as violins and guitars, percussion instruments such as xylophone and drums, wind instruments such as trumpets and flutes, diaphragms such as poppen (item that generates a sound when one blows into it)), and tuning forks; amusement merchandise such as event merchandise; water plants and containers to be used in decorative water tanks for aquariums; luminous watches, luminous hourglasses, hourglass-like luminous devices; luminous pseudo-candles; luminous artificial plants; artificial eyes; cosmetic compositions containing adhesive polymers, visually counterfeit-detectable printed matters and securities, printing inks containing mechanoluminescent particles, invoices, checks, stock certificates, corporate bonds, various financial instruments, gift vouchers, book tokens, tickets of transportation facilities, admission tickets of charged facilities and events, lotteries, winning betting tickets of public gambling sports, banknotes, identification papers, tickets, passes, passports, printed matters including classified documents, and seals.

Mechanoluminescent article/photocatalyst composites whose photocatalyst attached to the surface thereof is activated by mechanoluminescence can be utilized for antifungal treatment, sterilization, treatment of animals other than humans, cleaning of antibacterial articles such as straps and railings of vehicles, cleaning of inner walls of piping at dark places by the fluid energy of fluids. They can also promote crosslinking by activating a photocrosslinker in polymer resin in response to luminescence of the mechanoluminescent material.

The mechanoluminescent material may be first formed into a composite material with an inorganic material or organic material, and then shaped to provide a mechanoluminescent article. For example, the mechanoluminescent material in any amount is mixed with or embedded into an organic material such as resin or plastic to form a composite material, and thereby a mechanoluminescent article can be prepared. When an external mechanical force is applied to this mechanoluminescent article, the mechanoluminescent article is mechanically deformed to emit light.

Examples of the organic material include resins such as thermoplastic resins and thermosetting resins. Examples of the thermoplastic resins include polyethylene such as low-density polyethylene, medium-density polyethylene, high-density polyethylene, and linear low-density polyethylene, polypropylene, polystyrene, polyvinyl chloride, polyvinyl fluoride, polyvinylidene chloride, styrene polymers or copolymers such as acrylonitrile-butadiene-styrene copolymers (ABS resin), polyamide such as 6-nylon, 66-nylon, and 12-nylon, polyamide-imide, polyimide, polyetherimide, polyurethane, acrylic resins such as polymethyl methacrylate, polyvinyl acetate, ethylene-vinyl acetate copolymers, fluororesins such as polyvinylidene fluoride and polytetrafluoroethylene, alkenyl aromatic resins, polyesters such as polyethylene terephthalate, polybutylene terephthalate, polyethylene naphthalate, and polylactic acid, polycarbonates such as bisphenol A-type polycarbonate, polyacetal, polyphenylene sulfide, polymethyl pentene, cellulose, polyvinyl alcohol, polyvinyl acetal, polyacrylic acids such as polyacrylonitrile, styrene-acrylonitrile copolymers (AS resin), polyphenylene ether (PPE), modified PPE, polyarylate, polyphenylene sulfide, polysulfone, polyether sulfone, polyether nitrile, polyether ketone, polyketone, liquid crystal polymers, ethylene-propylene copolymers, copolymers of ethylene or propylene and another α-olefin (e.g., butene-1, pentene-1, hexene-1, 4-methyl pentene-1), and copolymers of ethylene and another unsaturated ethylenic monomer (e.g., vinyl acetate, acrylic acid, acrylic acid ester, methacrylic acid, methacrylic acid ester, vinyl alcohol).

These thermoplastic resins may be used alone or in combination of two or more. If the thermoplastic resin is a copolymer, it may be in any form such as a random copolymer or a block copolymer.

Examples of the thermosetting resins include phenol resin, urea resin, melamine resin, unsaturated polyester resin, diallyl phthalate resin, epoxy resin, silicone resin, alkyd resin, polyimide, poly(amino bismaleimide), casein resin, fran resin, and urethane resin. Further, resins curable by ultraviolet rays or radiation may be mentioned.

The thermoplastic resins may also be any rubbery materials such as natural rubber, polyisoprene rubber, styrene-butadiene rubber, polybutadiene rubber, ethylene-propylene-diene rubber, butyl rubber, chloroprene rubber, acrylonitrile-butadiene rubber, and silicone rubber.

The mechanoluminescent material may be further mixed with any of pigments, dyes, lubricants, antioxidants, ultraviolet absorbers, photostabilizers, antistatic agents, flame retardants, fungicides, antibacterial agents, curing catalysts, and photopolymerization initiators and shaped into any form such as rod, plate, film, fiber, membrane, needle, sphere, foil, particle, sand, scale, sheet, liquid, gel, sol, suspension, aggregate, or capsule.

Examples of the pigments include inorganic pigments and organic pigments.

Examples of the inorganic pigments include titanium oxide, barium sulfate, calcium carbonate, zinc oxide, lead sulfate, chrome yellow, zinc yellow, Bengala (red iron (III) oxide), cadmium red, ultramarine, Prussian blue, chromium oxide green, cobalt green, umber, titanium black, artificial iron black, carbon black, mica, aluminum oxide coated with titanium oxide or iron oxide, mica coated with titanium oxide or iron oxide, glass flakes, and holographic pigments. Examples of other metal powder pigments include aluminum powder, copper powder, stainless steel powder, metal colloid, and those having an interference effect, such as transparent pearl mica, colored mica, interference mica, interference alumina, and interference silica (interference glass).

Examples of the organic pigments include yellow pigments such as azo-based pigments (e.g., monoazo yellow, condensed azo yellow, azomethine yellow), yellow iron oxide, titan yellow, bismuth vanadate, benzimidazolone, isoindolinone, isoindoline, quinophthalone, benzidine yellow, and permanent yellow; orange pigments such as permanent orange; red pigments such as red iron oxide, naphthol AS-based azo red, anthanthrone, anthraquinonyl red, perylene maroon, quinacridone red, diketopyrrolopyrrole red, and permanent red; violet pigments such as cobalt violet, quinacridone violet, dioxazine violet; blue pigments such as cobalt blue, phthalocyanine-based pigments (e.g., phthalocyanine blue), and threne blue; green pigments such as phthalocyanine green, and organic dyes such as azo-based disperse dyes and anthraquinone-based disperse dyes.

Examples of the dyes include azo dyes, anthraquinone dyes, indigoid dyes, sulfur dyes, triphenyl methane dyes, pyrazolone dyes, stilbene dyes, diphenyl methane dyes, xanthene dyes, alizarin dyes, acridine dyes, quinone imine dyes (e.g., azine dyes, oxazine dyes, thiazine dyes), thiazole dyes, methine dyes, nitro dyes, and nitroso dyes.

Examples of the antioxidants include hindered phenol compounds, phosphite compounds, phosphonite compounds, and thioether compounds.

Examples of the hindered phenol compounds include α-tocopherol, butylated hydroxytoluene, sinapyl alcohol, vitamin E, n-octadecyl-β-(4'-hydroxy-3',5'-di-tert-butyl phenyl)propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, diethyl 3,5-di-tert-butyl-4-hydroxybenzyl phosphonate, 2,2'-methylenebis (4-methyl-6-tert-butylphenol), 2,2'-methylenebis (4-ethyl-6-tert-butylphenol), 4,4'-methylenebis (2,6-di-tert-butylphenol), 2,2'-methylenebis(4-methyl-6-cyclohexyl phenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl)propionate, 1,6-hexanediol bis[3-(3,5-di-tert-butyl-4-hydroxyphenyl)propionate], bis[2-tert-butyl-4-methyl-6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1,-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butyl phenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris 2[3(3,5-di-tert-butyl-4-hydroxyphenyl)propionyloxy]ethyl isocyanurate, and tetrakis[methylene-3-(3',5'-di-tert-butyl-4-hydroxyphenyl)propionate]methane.

Examples of the phosphite compounds include triphenyl phosphite, tris(nonylphenyl)phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, tris(diethylphenyl)phosphite, tris(di-isopropylphenyl)phosphite, tris(di-n-butylphenyl)phosphite, tris(2,4-di-tert-butylphenyl)phosphite, tris(2,6-di-tert-butylphenyl)phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis{2,4-bis(1-methyl-1-phenylethyl)phenyl}pentaerythritol diphosphite, phenyl bisphenol A pentaerythritol diphosphite, bis(nonylphenyl)pentaerythritol diphosphite, and dicyclohexyl pentaerythritol diphosphite. Examples of other phosphite compounds include those reactive with a dihydric phenol and having a cyclic structure.

Examples of the phosphonite compounds include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite, and bis(2,6-di-tert-butylphenyl)-3-phenyl-phenyl phosphonite.

Examples of the thioether compounds include dilauryl thiodipropionate, ditridecyl thiodipropionate, dimyristyl thiodipropionate, distearyl thiodipropionate, pentaerythritol-tetrakis(3-laurylthiopropionate), pentaerythritol-tetrakis(3-dodecylthiopropionate), pentaerythritol-tetrakis(3-octadecylthiopropionate), pentaerythritol tetrakis(3-myristylthiopropionate), and pentaerythritol-tetrakis(3-stearylthiopropionate).

Examples of the photostabilizers, including ultraviolet absorbers, include benzophenone compounds, benzotriazole compounds, aromatic benzoate compounds, oxalic anilide compounds, cyanoacrylate compounds, and hindered amine compounds.

Examples of the benzophenone compounds include benzophenone, 2,4-dihydroxybenzophenone, 2,2'-dihydroxybenzophenone, 2,2',4,4'-tetrahydroxybenzophenone, 2-hydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-octoxybenzophenone, 2-hydroxy-4-dodecyloxybenzophenone, 2-hydroxy-4-octoxybenzophenone, 2-hydroxy-4-methoxy-5-sulfobenzophenone, 5-chloro-2-hydroxybenzophenone, 2-hydroxy-4-octoxybenzophenone, 2-hydroxy-4-methoxy-2'-carboxybenzophenone, and 2-hydroxy-4-(2-hydroxy-3-methylacryloxyisopropoxy)benzophenone.

Examples of the benzotriazole compounds include 2-(5-methyl-2-hydroxyphenyl)benzotriazole, 2-(3,5-di-tert-butyl-2-hydroxyphenyl)benzotriazole, 2-(3,5-di-tert-amyl-2-hydroxyphenyl)benzotriazole, 2-(3',5'-di-tert-butyl-4'-methyl-2'-hydroxyphenyl)benzotriazole, 2-(3,5-di-tert-amyl-2-hydroxyphenyl)-5-chlorobenzotriazole, 2-(5-tert-butyl-2-hydroxyphenyl)benzotriazole, 2-[2'-hydroxy-3',5'-bis(α,α-dimethylbenzyl)phenyl]benzotriazole, 2-[2'-hydroxy-3',5'-bis(α,α-dimethylbenzyl)phenyl]-2H-benzotriazole, and 2-(4'-octoxy-2'-hydroxyphenyl)benzotriazole.

Examples of the aromatic benzoate compounds include alkylphenyl salicylates such as p-tert-butylphenyl salicylate and p-octylphenyl salicylate.

Examples of the oxalic anilide compounds include 2-ethoxy-2'-ethyl oxalic acid bisanilide, 2-ethoxy-5-tert-butyl-2'-ethyl oxalic acid bisanilide, and 2-ethoxy-3'-dodecyl oxalic acid bisanilide.

Examples of the cyanoacrylate compounds include ethyl-2-cyano-3,3'-diphenyl acrylate and 2-ethylhexyl-cyano-3,3'-diphenyl acrylate.

Examples of the hindered amine compounds include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-octadecyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, 1,2-bis(2,2,6,6-tetramethyl-4-piperidyloxy)-ethane, α,α'-bis(2,2,6,6-tetramethyl-4-piperidyloxy)-p-xylene, bis(2,2,6,6-tetramethyl-4-piperidyl)-tolylene-2,4-dicarbamate, bis(2,2,6,6-tetramethyl-4-piperidyl)-hexamethylene-1,6-dicarbamate, tris(2,2,6,6-tetramethyl-4-piperidyl)-benzene-1,3,5-tricarboxylate, tris(2,2,6,6-tetramethyl-4-piperidyl)-benzene-1,3,4-tricarboxylate, 1-2-{3-(3,5-di-tert-butyl-4-hydroxyphenyl)propionyloxy}-2,2,6,6-tetramethylpiperidine, and condensates of 1,2,3,4-butanetetracarboxylic acid, 1,2,2,6,6-pentamethyl-4-piperidinol, and β,β,β',β'-tetramethyl-3,9-[2,4,8,10-tetraoxaspiro(5,5)undecane]dimethanol.

Examples of the antistatic agents include inorganic antistatic agents, such as carbon powder (e.g., carbon black, graphite), metal oxides (e.g., tin-antimony complex oxides, antimony-indium-tin complex oxides, indium-tin complex oxides, conductive indium oxides doped with ions such as Sn, F, or Cl, tin oxide, zinc oxide), particles (powder) of metal (e.g., copper, nickel, silver, gold, aluminum), and metal fibers, and organic antistatic agents, such as quaternary ammonium salts (e.g., (β-lauramidepropionyl)trimethyl ammonium sulfate, sodium dodecylbenzene sulfonate), sulfonic acid salt compounds, and alkyl phosphate compounds.

Examples of the flame retardants include inorganic flame retardants such as bromine flame retardants, phosphorus flame retardants, chlorine flame retardants, triazine flame retardants, and salts of phosphoric acid and piperazine.

Examples of the bromine flame retardants include compounds such as brominated polystyrenes, brominated polyacrylates, brominated polyphenylene ethers, brominated bisphenol A epoxy resins, modified products of brominated bisphenol A epoxy resin whose glycidyl groups at molecular ends are partially or completely blocked, polycarbonate oligomers synthesized from brominated bisphenol A as a raw material, brominated diphthalimide compounds, brominated biphenyl ethers, and brominated diphenyl alkanes such as 1,2-di(pentabromophenyl)ethane. Especially mentioned among these are brominated polystyrenes such as polytribromostyrene, poly(dibromophenyleneoxide), decabromodiphenyl ether, bis(tribromophenoxy)ethane, 1,2-di(pentabromophenyl)ethane, ethylene-bis-(tetrabromophthalimide), tetrabromo bisphenol A, brominated polycarbonate oligomers, brominated polystyrenes such as polytribromostyrene, and 1,2-di(pentabromophenyl)ethane.

Examples of the phosphorus flame retardants include trimethyl phosphate, triethyl phosphate, tributyl phosphate, tri(2-ethylhexyl)phosphate, tributoxyethyl phosphate, triphenyl phosphate, tricresyl phosphate, trixylenyl phosphate, tris(isopropylphenyl)phosphate, tris(phenylphenyl)phosphate, trinaphthyl phosphate, cresyldiphenyl phosphate, xylenyldiphenyl phosphate, diphenyl(2-ethylhexyl)phosphate, di(isopropylphenyl)phenyl phosphate, monoisodecyl phosphate, 2-acryloyloxyethyl acid phosphate, 2-methacryloyloxyethyl acid phosphate, diphenyl-2-acryloyloxyethyl phosphate, diphenyl-2-methacryloyloxyethyl phosphate, melamine phosphate, dimelamine phosphate, melamine pyrophosphate, triphenylphosphine oxide, tricresylphosphine oxide, phosphates such as diphenylmethane phosphonate and diethylphenyl phosphonate, and aromatic condensed phosphates such as resorcinol polyphenyl phosphate, 1,3-phenylene bis(2,6-dimethylphenyl phosphate), resorcinol poly(di-2,6-xylyl)phosphate, bisphenol A polycresyl phosphate, bisphenol A polyphenyl phosphate, hydroquinone poly(2,6-xylyl)phosphate, and condensates thereof.

Examples of the chlorine flame retardants include pentachloropentacyclodecane, hexachlorobenzene, pentachlorotoluene, tetrachlorobisphenol A, and polychlorostyrene.

Examples of the triazine flame retardants include melamine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine.

Examples of the salts of phosphoric acid and piperazine include piperazine orthophosphate, piperazine pyrophosphate, and piperazine polyphosphate.

Examples of the inorganic flame retardants include antimony compounds such as antimony trioxide and antimony tetrachloride, zinc borate, sodium borate, aluminum hydroxide, magnesium hydroxide, and red phosphorus.

Examples of the fungicides include copper fungicides such as oxine copper, organosulfur fungicides such as zineb and maneb, organochlorine fungicides such as captan and chlorothalonil, benzoimidazole fungicides such as thiophanate-methyl, benomyl, carbendazole, and thiabendazole, dicarboxyimide fungicides such as iprodione, vinclozolin, and procymidone, acid amide fungicides such as furametpyr, phenylpyrrole fungicides such as fludioxonil, morpholine fungicides such as dimethomorph, methoxy acrylate fungicides such as azoxystrobin, kresoxim-methyl, and oribright, anilinopyrimidine fungicides such as mepanipyrim, cyprodinil, and pyrimethanil, ergosterol biosynthesis inhibitors such as triadimefon and triflumizole, soil disinfectants such as chloropicrin and PCNB, as well as fluazinam, o-phenyl phenol (OPP), diphenyl, chlorodiphenyl, cresol, 1,2-bis(bromoacetoxy)ethane, cinnamaldehyde, phenyl acetate, allyl isothiocyanate, α-methylacetophenone, thymol, perchlorocyclopentadiene, bromoacetic acid, 2,2-dibromo-3-nitrile propionamide, ethyl chloroacetate, butyl chloroacetate, methyl chloroacetate, 5-chloro-2-methylisothiazolin-3-one, glutaraldehyde, and hinokitiol.

Examples of the antibacterial agents include inorganic powder including one or more antibacterial metals such as silver, zinc, and copper supported on an inorganic compound. Examples of the supporter include zeolites, apatites, zirconium phosphate, titanium oxide, silica gel, aluminum hydrogen sulfate, calcium phosphate, and calcium silicate. Examples further include antibacterial glass powder including glass made of one or more glass components such as phosphoric acid glass, boric acid glass, and silicic acid glass and one or more antibacterial metals such as silver, zinc, and copper contained therein.

Examples of the lubricants include fatty acids, fatty acid metal salts, hydroxy fatty acids, paraffins, low molecular weight polyolefins, fatty acid amides, alkylene bis-fatty acid amides, aliphatic ketones, partially saponified fatty acid esters, fatty acid lower alcohol esters, fatty acid polyhydric alcohol esters, fatty acid polyglycol esters, and modified silicones.

Examples of the fatty acids include C6-C40 fatty acids such as oleic acid, stearic acid, lauric acid, hydroxy stearic acid, behenic acid, arachidonic acid, linoleic acid, linolenic acid, ricinoleic acid, palmitic acid, montanic acid, and mixtures thereof. Examples of the fatty acid metal salts include alkali (or alkaline-earth) metal salts of a C6-C40 fatty acid, such as sodium laurate, potassium laurate, magnesium laurate, calcium laurate, zinc laurate, barium laurate, sodium stearate, potassium stearate, magnesium stearate, calcium stearate, zinc stearate, barium stearate, sodium behenate, potassium behenate, magnesium behenate, calcium behenate, zinc behenate, barium behenate, sodium montanate, and calcium montanate.

Examples of the hydroxy fatty acids include 1,2-hydroxystearic acid.

Examples of the paraffins include those having 18 or more carbon atoms such as liquid paraffin, natural paraffin, microcrystalline wax, and petrolactum.

Examples of the low molecular weight polyolefins include those having a molecular weight of 5000 or lower such as polyethylene wax, maleic acid-modified polyethylene wax, oxidized polyethylene wax, chlorinated polyethylene wax, and polypropylene wax. Specific examples of the fatty acid amides include those having 6 or more carbon atoms such as oleic acid amide, erucic acid amide, and behenic acid amide.

Examples of the alkylene bis-fatty acid amides include those having 6 or more carbon atoms such as methylenebis stearic acid amide, ethylenebis stearic acid amide, and N,N-bis(2-hydroxyethyl)stearic acid amide.

Examples of the aliphatic ketones include those having 6 or more carbon atoms such as higher aliphatic ketones.

Examples of the partially saponified fatty acid esters include partially saponified montanic acid esters.

Examples of the fatty acid lower alcohol esters include stearates, oleates, linoleates, linolenates, adipates, behenates, arachidonates, montanates, and isostearates.

Examples of the fatty acid polyhydric alcohol esters include glycerol tristearate, glycerol distearate, glycerol monostearate, pentaerythritol tetrastearate, pentaerythritol tristearate, pentaerythritol dimyristate, pentaerythritol monostearate, pentaerythritol adipate stearate, and sorbitan monobehenate.

Examples of the fatty acid polyglycol esters include polyethylene glycol fatty acid esters, polytrimethylene glycol fatty acid esters, and polypropylene glycol fatty acid esters.

Examples of the modified silicones include polyether-modified silicones, higher fatty acid alkoxy-modified silicones, higher fatty acid-containing silicones, higher fatty acid ester-modified silicones, methacryl-modified silicones, and fluorine-modified silicones.

Examples of the curing catalysts include organic peroxides such as t-butyl peroxybenzoate, benzoyl peroxide, methyl ethyl ketone peroxide, and azo compounds (e.g., azobisisobutyronitrile and azobisisovaleronitrile), organic metal derivatives such as salts of metals and organic or inorganic acids, including tin octylate, dibutyltin di(2-ethylhexanoate), dioctyltin di(2-ethylhexanoate), dioctyltin diacetate, dibutyltin dilaurate, dioctyltin dilaurate, dibutyltin oxide, dioctyltin oxide, dibutyltin fatty acid salts, lead 2-ethylhexanoate, zinc octylate, zinc naphthenate, fatty acid zinc, cobalt naphthenate, calcium octylate, copper naphthenate, lead 2-ethylhexanoate, lead octylate, and tetra-n-butyl titanate, inorganic acids such as hydrochloric acid, nitric acid, and sulfuric acid, sulfonic acid compounds such as p-toluenesulfonic acid, dodecylbenzenesulfonic acid, dinonylnaphthalenesulfonic acid, and dinonylnaphthalenedisulfonic acid, amine-neutralized sulfonic acid compounds, organic amines such as triethyl amine, phosphoric acid, pyrophosphoric acid, and phosphoric acid mono or diesters. Examples of the phosphoric acid mono esters include monooctyl phosphate, monopropyl phosphate, and monolauryl phosphate. Examples of the phosphoric acid diesters include dioctyl phosphate, dipropyl phosphate, and dilauryl phosphate. Examples further include phosphorus acid compounds such as mono(2-(meth)acryloyloxyethyl)acid phosphate, diazabicycloundecene-based catalysts, Lewis acids, and anhydrides.

Examples of the photopolymerization initiators include hydroxybenzoyl compounds (e.g., 2-hydroxy-2-methyl-1-phenylpropan-1-one, 1-hydroxycyclohexyl phenyl ketone, benzoin alkyl ethers), benzoyl formate compounds (e.g., methylbenzoyl formate), thioxanthone compounds (e.g., isopropyl thioxanthone), benzophenone compounds (e.g., benzophenone), phosphoric acid ester compounds (e.g., 1,3,5-trimethyl benzoyldiphenyl phosphine oxide), and benzyldimethyl ketal.

The mechanoluminescent material can be mixed with a coating to provide a mechanoluminescent coating composition. This mechanoluminescent coating composition may be applied to the surface of other materials. When an external mechanical force is applied to a material coated with the mechanoluminescent material, the mechanoluminescent material layer on the material surface is deformed to emit light. Since the coating composition containing the mechanoluminescent material has high mechanoluminescence intensity, it can provide highly noticeable coating.

The coating composition to be used may be a coating composition containing a film-forming resin. The coating composition may contain any coating additives such as solvents, dispersants, fillers, thickening agents, levelling agents, curing agents, crosslinkers, pigments, antifoams, antioxidants, photostabilizers (including ultraviolet absorbers), flame retardants, curing catalysts, fungicides, and antibacterial agents.

Examples of a material for the coating composition include various resins such as thermosetting resin, room-temperature-curable resin, UV-curable resin, and radiation-curable resin. Specific examples thereof include acrylic resin, alkyd resin, urethane resin, polyester resin, amino resin, organosilicates, and organotitanates. Examples of an ink-film-forming material include urethane resin, acrylic resin, polyamide resin, vinyl chloride-vinyl acetate resin, and chlorinated propylene resin.

Examples of the solvents include aliphatic hydrocarbons, aromatic hydrocarbons (C7 to C10, e.g., toluene, xylene, and ethyl benzene), esters or ether esters (C4 to C10, e.g., methoxybutyl acetate), ethers (C4 to C10, e.g., tetrahydrofuran, monoethyl ether of EG, monobutyl ether of EG, monomethyl ether of PG, and monoethyl ether of DEG), ketones (C3 to C10, e.g., methyl isobutyl ketone, di-n-butyl ketone), alcohols (C1 to C10, e.g., methanol, ethanol, n- and i-propanol, n-, i-, sec-, and t-butanol, 2-ethylhexyl alcohol), amides (C3 to C6, e.g., dimethyl formamide, dimethyl acetamide, N-methylpyrrolidone), sulfoxides (C2 to C4, e.g., dimethyl sulfoxide), solvent mixtures of two or more of these solvents, and water or the aforementioned solvent mixtures.

Examples of the dispersants include low-molecular-weight dispersants and high-molecular-weight dispersants; Examples of the high-molecular-weight dispersants include formalin condensates of naphthalene sulfonates (alkali metal (e.g., Na, K) salts, ammonium salts), polystyrene sulfonates (the same salts as mentioned above), polyacrylates (the same salts as mentioned above), salts (the same salts as mentioned above) of polycarboxylic acids (2 to 4 units, e.g., maleic acid/glycerin/monoallyl ether copolymers), carboxymethyl cellulose (Mn: 2,000 to 10,000), and polyvinyl alcohols (Mn: 2,000 to 100,000).

Examples of low-molecular-weight dispersants include the following.

### (1) Polyoxyalkylene type

Examples thereof include (C2 to C4) AO (1 to 30 mol) adducts of (C4-C30) aliphatic alcohols, of ((C1 to C30) alkyl)phenols, of (C4-C30) aliphatic amines, and of (C4-C30) aliphatic amides.

Examples of the aliphatic alcohols include n-, i-, sec-, and t-butanol, octanol, and dodecanol; Examples of the (alkyl)phenols include phenol, methylphenol, and nonylphenol; Examples of the aliphatic amines include lauryl amine and methyl stearyl amine; Examples of the aliphatic amides include stearamide.

### (2) Polyhydric alcohol type

Examples thereof include monoester compounds of C4-C30 fatty acids (e.g., lauric acid, stearic acid) and (dihydric to hexahydric or more) polyhydric alcohols (e.g., GR, PE, sorbitol, and sorbitan).

### (3) Carboxylate type

Examples thereof include alkali metal (the same as mentioned above) salts of C4-C30 fatty acids (the same as mentioned above).

### (4) Sulfuric acid ester type

Examples thereof include sulfuric acid ester alkali metal (the same as mentioned above) salts of C4-C30 aliphatic alcohols and of (C2 to C4) AO (1 to 30 mol) adducts of aliphatic alcohols (the same as mentioned above).

### (5) Sulfonate type

Examples thereof include sulfonic acid alkali metal (the same as mentioned above) salts of ((C1-C30) alkyl)phenols (the same as mentioned above).

### (6) Phosphoric acid ester type

Examples thereof include salts (e.g., alkali metal (the same as mentioned above) salts, quaternary ammonium salts) of mono- or di-phosphoric acid esters of C4-C30 aliphatic alcohols (the same as mentioned above) and of (C2-C4) AO (1 to 30 mol) adducts of aliphatic alcohols.

### (7) Primary to tertiary amine salt type

Examples thereof include hydrochlorides of C4-C30 aliphatic amines (primary amines (e.g., lauryl amine), secondary amines (e.g., dibutyl amine), and tertiary amines (e.g., dimethyl stearyl amine)), and inorganic acid (e.g., hydrochloric acid, sulfuric acid, nitric acid, and phosphoric acid) salts of monoesters of triethanol amine and C4-C30 fatty acids (the same as mentioned above).

### (8) Quaternary ammonium salt type

Examples thereof include inorganic acid (the same as mentioned above) salts of C4-C30 quaternary ammonium (e.g., butyl trimethyl ammonium, diethyl lauryl methyl ammonium, dimethyl distearyl ammonium).

Examples of the inorganic dispersants include alkali metal (the same as mentioned above) salts of polyphosphoric acid and phosphoric acid-based dispersants (e.g., phosphoric acid, monoalkyl phosphates, and dialkyl phosphates).

Examples of the fillers include oxide-based inorganic matters such as silica, alumina, zirconia, and mica, fine powder of non-oxide-based inorganic matter such as silicon carbide and silicon nitride, and organic compounds such as acrylic resin and fluororesin. In accordance with the applications thereof, metal powder of aluminum, zinc, copper, or the like may be added. Specific examples of the fillers include sols such as silica sol, zirconia sol, alumina sol, and titania sol; silica-based matters such as silica sand, quartz, novaculite, and diatomaceous earth; synthesized amorphous silica; silicates such as kaolinite, mica, talc, wollastonite, asbestos, calcium silicate, and aluminum silicate; glass materials such as glass powder, glass spheres, hollow glass spheres, glass flakes, and foam glass spheres; non-oxide-based inorganic matters such as boron nitride, boron carbide, aluminum nitride, aluminum carbide, silicon nitride, silicon carbide, titanium borate, titanium nitride, and titanium carbide; calcium carbonate; metal oxides such as zinc oxide, alumina, magnesia, titanium oxide, and beryllium oxide; other inorganic matters such as barium sulfate, molybdenum disulfide, tungsten disulfide, and carbon fluoride; metal powder of aluminum, bronze, lead, stainless steel, and zinc; and carbonaceous matters such as carbon black, coke, graphite, pyrolytic carbon, and hollow carbon spheres.

Examples of the thickening agents include inorganic filler-type thickening agents such as montmorillonite-based clay minerals, bentonite containing such minerals, and colloidal alumina; cellulose-type thickening agents such as methyl cellulose, carboxymethyl cellulose, hexylmethyl cellulose, hydroxyethyl cellulose, and hydroxypropyl cellulose; urethane resin-type thickening agents; polyvinyl-type thickening agents such as polyvinyl alcohol, polyvinylpyrrolidone, and polyvinyl benzyl ether copolymers; polyether resin-type thickening agents such as polyether dialkyl esters, polyether dialkyl ethers, and epoxy-modified polyethers; associative thickening agents such as urethane-modified polyethers; special polymeric nonionic thickening agents such as polyether polyol-type or urethane resin-type thickening agents; surfactant-type thickening agents such as nonionic thickening agents; protein-type thickening agents such as casein, sodium caseinate, and ammonium caseinate; and acrylic acid-type thickening agents such as sodium alginate.

Examples of the leveling agents include PEG-type nonionic surfactants (e.g., nonyl phenol EO (1 to 40 mol) adducts, stearic acid EO (1 to 40 mol) adducts), polyhydric alcohol-type nonionic surfactants (e.g., sorbitan monopalmitate, sorbitan monostearate, sorbitan tristearate), fluorine-containing surfactants (e.g., perfluoroalkyl EO (1 to 50 mol) adducts, perfluoroalkyl carboxylic acid salts, perfluoroalkyl betaine), and modified silicone oil (e.g., polyether-modified silicone oil, (meth)acrylate-modified silicone oil).

Examples of curing agents for polyol include cold-curable isocyanates such as hexamethylene diisocyanate, trimethylhexamethylene diisocyanate, isophorone diisocyanate, hydrogenated diphenylmethane diisocyanate, diphenylmethane diisocyanate, xylylene diisocyanate, hydrogenated xylylene diisocyanate, tolylene diisocyanate, hydrogenated tolylene diisocyanate, lysine diisocyanate, polyisocyanate compounds in the form of isocyanurate or biuret, polyol (e.g., ethylene glycol, propylene glycol, trimethylol propane) adducts of polyisocyanate compounds, block polyisocyanate curing agents used alone or in combination of two or more, polyol adducts thereof, and copolymers and block polymers thereof. Examples of curing agents for epoxy resin include anhydrides, phenol resin, polyamide resin, amine adducts, urea resin, melamine resin, and isocyanates.

Examples of the crosslinkers include melamine resin, urea resin, polyisocyanate compounds, block polyisocyanate compounds, epoxy compounds or resin, carboxyl group-containing compounds or resin, anhydrides, alkoxysilane group-containing compounds or resin, and compounds having a hydroxymethyl group and a methoxymethyl or ethoxymethyl group such as hexamethoxy methylated melamine, N,N,N',N'-tetrahydroxymethyl succinamide, tetramethoxy methylated urea, and 2,4,6-tetrahydroxy methylated phenol.

Examples of the pigments include those mentioned above, as well as vanadium compounds such as vanadium pentaoxide, calcium vanadate, magnesium vanadate, and ammonium metavanadate; phosphate-type rustproof pigments such as magnesium phosphate, magnesium/ammonium phosphate eutectoid compounds, magnesium monohydrogen phosphate, magnesium dihydrogen phosphate, magnesium/calcium phosphate eutectoid compounds, magnesium/cobalt phosphate eutectoid compounds, magnesium/nickel phosphate eutectoid compounds, magnesium phosphite, magnesium/calcium phosphite eutectoid compounds, aluminum dihydrogen tripolyphosphate, magnesium tripolyphosphate, products of treating phosphoric acid metal salts with magnesium-containing compounds, such as aluminum dihydrogen tripolyphosphate treated with magnesium oxide and zinc dihydrogen tripolyphosphate treated with magnesium oxide, and silica-modified compounds of magnesium phosphate such as silica-modified magnesium phosphate; rustproof pigments containing a zinc component such as zinc phosphate, zinc free-rustproof pigments such as magnesium-treated aluminum dihydrogen tripolyphosphate and calcium-treated calcium phosphate; calcium silicates such as composite calcium silicates including calcium orthosilicate components or calcium metasilicate components; metal ion-exchanged silica such as calcium ion-exchanged silica and magnesium ion-exchanged silica; and rustproof pigments containing hexavalent chromium or lead.

Examples of the antifoams include silicone-type antifoams such as silicone oil, dimethyl polysiloxane, modified organopolysiloxane, and fluorine-modified polysiloxane, mineral oil-type antifoams, non-silicone polymer-type antifoams, antifoams containing at least one selected from the group consisting of modified organofluorine compounds and polyoxyalkylene compounds, and antifoams formed of a C18 or more aliphatic alcohol.

Examples of the antioxidants, photostabilizers (including ultraviolet absorbers), flame retardants, curing catalysts, fungicides, and antibacterial agents include the same as mentioned above.

### EXAMPLES

Examples of materials used according to the present invention will be more specifically described hereinbelow referring to examples.

### Example 1 (mechanoluminescent material containing activated alumina as raw material and neodymium as co-activator)

Strontium carbonate (SW-K, SAKAI CHEMICAL INDUSTRY CO., LTD., 23.50 g), europium oxide (Shin-Etsu Chemical Co., Ltd., 0.16 g), neodymium oxide (reagent, Wako Pure Chemical Industries, Ltd., 0.06 g), and aluminum oxide (activated alumina RG-40 (mixture of θ-alumina and η-alumina, α-alumina content: 8 mol%), Iwatani Chemical Industry Co., Ltd., 18.04 g) were added to water (90 mL). Then, the components were dispersed, ground, and mixed using a planetary ball mill with 3-mm-diameter alumina balls (SSA-999W, NIKKATO CORP., 190 g) as grinding media, and thereby slurry was obtained. The resulting slurry was evaporation-dried at 130°C. The resulting solid matter was crushed on a mortar, and thereby a powdery raw material composition for a mechanoluminescent material was obtained. Next, 20 g of the composition was charged into an alumina crucible. In a reducing atmosphere (2% hydrogen-containing nitrogen), the temperature was increased up to 1200°C at a rate of 200°C/h, maintained at this temperature for four hours, and then decreased down to room temperature at a rate of 200°C/h. The resulting sintered product was ground and granulated in an alcohol solvent using a planetary ball mill, and then the ground product was filtered and dried. Thereby, the target mechanoluminescent material in the form of powder was obtained.

### Example 2 (mechanoluminescent material containing activated alumina as raw material and dysprosium as co-activator)

Strontium carbonate (SW-K, SAKAI CHEMICAL INDUSTRY CO., LTD., 23.50 g), europium oxide (Shin-Etsu Chemical Co., Ltd., 0.16 g), dysprosium acetate tetrahydrate (reagent, Wako Pure Chemical Industries, Ltd., 0.15 g), and aluminum oxide (activated alumina RG-40, Iwatani Chemical Industry Co., Ltd., 18.03 g) were added to water (90 mL). Subsequently, in the same manner as in Example 1, the target mechanoluminescent material in the form of powder was obtained.

### Example 3 (mechanoluminescent material containing activated alumina as raw material and holmium as co-activator)

Strontium carbonate (SW-K, SAKAI CHEMICAL INDUSTRY CO., LTD., 23.50 g), europium oxide (Shin-Etsu Chemical Co., Ltd., 0.16 g), holmium oxide (reagent, Wako Pure Chemical Industries, Ltd., 0.07 g), and aluminum oxide (activated alumina RG-40, Iwatani Chemical Industry Co., Ltd., 18.03 g) were added to water (90 mL). Subsequently, in the same manner as in Example 1, the target mechanoluminescent material in the form of powder was obtained.

### Example 4 (mechanoluminescent material containing α-alumina as raw material and neodymium as co-activator)

The target mechanoluminescent material in the form of powder was obtained in the same manner as in Example 1 except that RA-40 (α-alumina, Iwatani Chemical Industry Co., Ltd., 18.03 g) was used as aluminum oxide instead of RG-40.

### Example 5 (mechanoluminescent material containing α-alumina as raw material and dysprosium as co-activator)

The target mechanoluminescent material in the form of powder was obtained in the same manner as in Example 2 except that RA-40 (α-alumina, Iwatani Chemical Industry Co., Ltd., 18.03 g) was used as aluminum oxide instead of RG-40.

### Example 6 (mechanoluminescent material containing α-alumina as raw material and holmium as co-activator)

The target mechanoluminescent material in the form of powder was obtained in the same manner as in Example 3 except that RA-40 (α-alumina, Iwatani Chemical Industry Co., Ltd., 18.03 g) was used as aluminum oxide instead of RG-40.

### Comparative Example 1 (mechanoluminescent material containing activated alumina as raw material and no co-activator)

Strontium carbonate (SW-K, SAKAI CHEMICAL INDUSTRY CO., LTD., 23.54 g), europium oxide (Shin-Etsu Chemical Co., Ltd., 0.16 g), and aluminum oxide (activated alumina RG-40, Iwatani Chemical Industry Co., Ltd., 18.06 g) were added to water (90 mL). Then, the components were dispersed, ground, and mixed using a planetary ball mill with 3-mm-diameter alumina balls (SSA-999W, NIKKATO CORP., 190 g) as grinding media, and thereby slurry was obtained. The resulting slurry was evaporation-dried at 130°C. The resulting solid matter was crushed on a mortar, and thereby a powdery raw material composition for a mechanoluminescent material was obtained. This composition was subjected to crystallographic analysis (RINT-TTRIII, Rigaku Corp.). Next, 20 g of the composition was charged into an alumina crucible. In a reducing atmosphere (2% hydrogen-containing nitrogen), the temperature was increased up to 1200°C at a rate of 200°C/h, maintained at this temperature for four hours, and then decreased down to room temperature at a rate of 200°C/h. The resulting sintered product was ground and granulated in an alcohol solvent using a planetary ball mill, and then the ground product was filtered and dried. Thereby, the target mechanoluminescent material for comparison in the form of powder was obtained. The powder was subjected to crystallographic analysis.

### Comparative Example 2 (mechanoluminescent material containing activated alumina as raw material and lanthanum as co-activator)

Strontium carbonate (SW-K, SAKAI CHEMICAL INDUSTRY CO., LTD., 23.50 g), europium oxide (Shin-Etsu Chemical Co., Ltd., 0.16 g), lanthanum oxide (reagent, Wako Pure Chemical Industries, Ltd., 0.06 g), and aluminum oxide (activated alumina RG-40, Iwatani Chemical Industry Co., Ltd., 18.04 g) were added to water (90 mL). Subsequently, in the same manner as in Example 1, a mechanoluminescent material for comparison in the form of powder was obtained.

### Comparative Example 3 (mechanoluminescent material containing activated alumina as raw material and cerium as co-activator)

Strontium carbonate (SW-K, SAKAI CHEMICAL INDUSTRY CO., LTD., 23.50 g), europium oxide (Shin-Etsu Chemical Co., Ltd., 0.16 g), cerium oxide (reagent, Wako Pure Chemical Industries, Ltd., 0.06 g), and aluminum oxide (activated alumina RG-40, Iwatani Chemical Industry Co., Ltd., 18.04 g) were added to water (90 mL). Subsequently, in the same manner as in Example 1, a mechanoluminescent material for comparison in the form of powder was obtained.

### Comparative Example 4 (mechanoluminescent material containing activated alumina as raw material and samarium as co-activator)

Strontium carbonate (SW-K, SAKAI CHEMICAL INDUSTRY CO., LTD., 23.50 g), europium oxide (Shin-Etsu Chemical Co., Ltd., 0.16 g), samarium acetate tetrahydrate (reagent, Wako Pure Chemical Industries, Ltd., 0.14 g), and aluminum oxide (activated alumina RG-40, Iwatani Chemical Industry Co., Ltd., 18.03 g) were added to water (90 mL). Subsequently, in the same manner as in Example 1, a mechanoluminescent material for comparison in the form of powder was obtained.

### Comparative Example 5 (mechanoluminescent material containing activated alumina as raw material and gadolinium as co-activator)

Strontium carbonate (SW-K, SAKAI CHEMICAL INDUSTRY CO., LTD., 23.50 g), europium oxide (Shin-Etsu Chemical Co., Ltd., 0.16 g), gadolinium oxide (reagent, Wako Pure Chemical Industries, Ltd., 0.06 g), and aluminum oxide (activated alumina RG-40, Iwatani Chemical Industry Co., Ltd., 18.03 g) were added to water (90 mL). Subsequently, in the same manner as in Example 1, a mechanoluminescent material for comparison in the form of powder was obtained.

### Comparative Example 6 (mechanoluminescent material containing activated alumina as raw material and terbium as co-activator)

Strontium carbonate (SW-K, SAKAI CHEMICAL INDUSTRY CO., LTD., 23.50 g), europium oxide (Shin-Etsu Chemical Co., Ltd., 0.16 g), terbium oxide (reagent, Wako Pure Chemical Industries, Ltd., 0.07 g), and aluminum oxide (activated alumina RG-40, Iwatani Chemical Industry Co., Ltd., 18.03 g) were added to water (90 mL). Subsequently, in the same manner as in Example 1, a mechanoluminescent material for comparison in the form of powder was obtained.

### Comparative Example 7 (mechanoluminescent material containing activated alumina as raw material and erbium as co-activator)

Strontium carbonate (SW-K, SAKAI CHEMICAL INDUSTRY CO., LTD., 23.50 g), europium oxide (Shin-Etsu Chemical Co., Ltd., 0.16 g), erbium oxide (reagent, Wako Pure Chemical Industries, Ltd., 0.07 g), and aluminum oxide (activated alumina RG-40, Iwatani Chemical Industry Co., Ltd., 18.03 g) were added to water (90 mL). Subsequently, in the same manner as in Example 1, a mechanoluminescent material for comparison in the form of powder was obtained.

### Comparative Example 8 (mechanoluminescent material containing activated alumina as raw material and ytterbium as co-activator)

Strontium carbonate (SW-K, SAKAI CHEMICAL INDUSTRY CO., LTD., 23.50 g), europium oxide (Shin-Etsu Chemical Co., Ltd., 0.16 g), ytterbium oxide (reagent, Wako Pure Chemical Industries, Ltd., 0.07 g), and aluminum oxide (activated alumina RG-40, Iwatani Chemical Industry Co., Ltd., 18.03 g) were added to water (90 mL). Subsequently, in the same manner as in Example 1, a mechanoluminescent material for comparison in the form of powder was obtained.

### Comparative Example 9 (mechanoluminescent material containing α-alumina as raw material and no co-activator)

The target mechanoluminescent material in the form of powder was obtained in the same manner as in Comparative Example 1 except that RA-40 (α-alumina (content: 98 mol%), Iwatani Chemical Industry Co., Ltd., 18.06 g) was used as aluminum oxide instead of RG-40.

### Comparative Example 10 (mechanoluminescent material containing α-alumina as raw material and lanthanum as co-activator)

The target mechanoluminescent material in the form of powder was obtained in the same manner as in Comparative Example 2 except that RA-40 (α-alumina, Iwatani Chemical Industry Co., Ltd., 18.04 g) was used as aluminum oxide instead of RG-40.

### Comparative Example 11 (mechanoluminescent material containing α-alumina as raw material and cerium as co-activator)

The target mechanoluminescent material in the form of powder was obtained in the same manner as in Comparative Example 3 except that RA-40 (α-alumina, Iwatani Chemical Industry Co., Ltd., 18.04 g) was used as aluminum oxide instead of RG-40.

### Comparative Example 12 (mechanoluminescent material containing α-alumina as raw material and samarium as co-activator)

The target mechanoluminescent material in the form of powder was obtained in the same manner as in Comparative Example 4 except that RA-40 (α-alumina, Iwatani Chemical Industry Co., Ltd., 18.03 g) was used as aluminum oxide instead of RG-40.

### Comparative Example 13 (mechanoluminescent material containing α-alumina as raw material and gadolinium as co-activator)

The target mechanoluminescent material in the form of powder was obtained in the same manner as in Comparative Example 5 except that RA-40 (α-alumina, Iwatani Chemical Industry Co., Ltd., 18.03 g) was used as aluminum oxide instead of RG-40.

### Comparative Example 14 (mechanoluminescent material containing α-alumina as raw material and terbium as co-activator)

The target mechanoluminescent material in the form of powder was obtained in the same manner as in Comparative Example 6 except that RA-40 (α-alumina, Iwatani Chemical Industry Co., Ltd., 18.03 g) was used as aluminum oxide instead of RG-40.

### Comparative Example 15 (mechanoluminescent material containing α-alumina as raw material and erbium as co-activator)

The target mechanoluminescent material in the form of powder was obtained in the same manner as in Comparative Example 7 except that RA-40 (α-alumina, Iwatani Chemical Industry Co., Ltd., 18.03 g) was used as aluminum oxide instead of RG-40.

### Comparative Example 16 (mechanoluminescent material containing α-alumina as raw material and ytterbium as co-activator)

The target mechanoluminescent material in the form of powder was obtained in the same manner as in Comparative Example 8 except that RA-40 (α-alumina, Iwatani Chemical Industry Co., Ltd., 18.03 g) was used as aluminum oxide instead of RG-40.

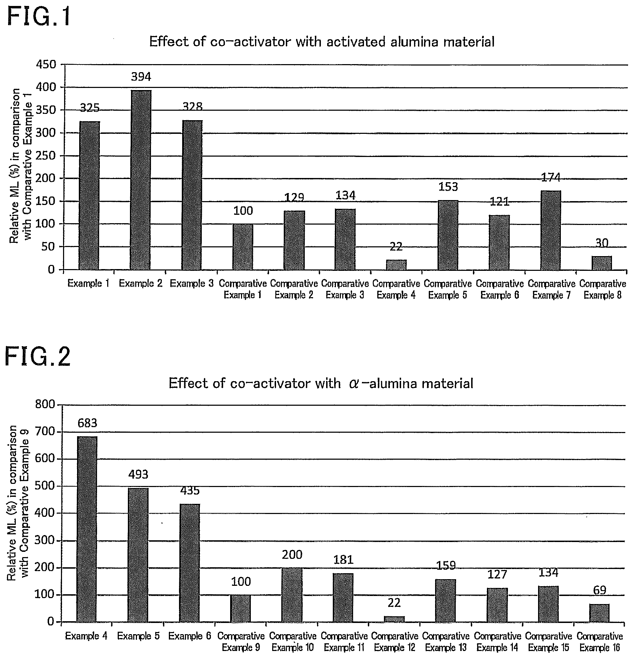

The mechanoluminescent performance of the resulting powder was evaluated by the following method. In order to form cylindrical pellets, a transparent plastic cell was charged with the powder and epoxy resin at a weight ratio of 1:1 and the components were manually mixed, and then the mixture was cured at 40°C. The resulting cylindrical pellets obtained by curing were loaded at 1000 N using a table-top precision universal tester (AGS-X series, Shimadzu Corp.). The light emission at this time was detected using a photomultiplier tube module (H7827-011, Hamamatsu Photonics K.K.). The results were shown in Tables 1 and 2 and Figs. 1 and 2. The term "relative ML" for the vertical axis in each of Figs. 1 and 2 is synonymous with the term "relative mechanoluminescence intensity" in Tables 1 and 2. This value is an intensity (unit: %) relative to the mechanoluminescence intensity (= 100%) with no co-activator (Comparative Example 1 or 9).

**[Table 1]**

| | Alumina material | Co-activator element | Relative mechanoluminescence intensity (%)* |
|---|---|---|---|
| Example 1 | activated alumina | Nd | 325 |
| Example 2 | activated alumina | Dy | 394 |
| Example 3 | activated alumina | Ho | 328 |
| Comparative Example 1 | activated alumina | None | 100 |
| Comparative Example 2 | activated alumina | La | 129 |
| Comparative Example 3 | activated alumina | Ce | 134 |
| Comparative Example 4 | activated alumina | Sm | 22 |
| Comparative Example 5 | activated alumina | Gd | 153 |
| Comparative Example 6 | activated alumina | Tb | 121 |
| Comparative Example 7 | activated alumina | Er | 174 |
| Comparative Example 8 | activated alumina | Yb | 30 |

| | | | |
|---|---|---|---|
| * Intensity (%) relative to the mechanoluminescence Intensity (= 100%) of Comparative Example 1 | | | |

**[Table 2]**

| | Alumina material | Co-activator element | Relative mechanoluminescence intensity (%)* |
|---|---|---|---|
| Example 4 | α-alumina | Nd | 683 |
| Example 5 | α-alumina | Dy | 493 |
| Example 6 | α-alumina | Ho | 435 |
| Comparative Example 9 | α-alumina | None | 100 |
| Comparative Example 10 | α-alumina | La | 200 |
| Comparative Example 11 | α-alumina | Ce | 181 |
| Comparative Example 12 | α-alumina | Sm | 22 |
| Comparative Example 13 | α-alumina | Gd | 159 |
| Comparative Example 14 | α-alumina | Tb | 127 |
| Comparative Example 15 | α-alumina | Er | 134 |
| Comparative Example 16 | α-alumina | Yb | 69 |

| | | | |
|---|---|---|---|
| * Intensity (%) relative to the mechanoluminescence intensity (= 100%) of Comparative Example 9 | | | |

### Example 7 (mechanoluminescent material containing activated alumina as raw material and holmium as co-activator)

Strontium carbonate (SW-K, SAKAI CHEMICAL INDUSTRY CO., LTD., 23.52 g), europium oxide (Shin-Etsu Chemical Co., Ltd., 0.16 g), holmium oxide (reagent, Wako Pure Chemical Industries, Ltd., 0.03 g), and aluminum oxide (activated alumina RG-40, Iwatani Chemical Industry Co., Ltd., 18.05 g) were added to water (90 mL). Subsequently, in the same manner as in Example 1, the target mechanoluminescent material in the form of powder was obtained.

### Example 8 (mechanoluminescent material containing activated alumina as raw material and holmium as co-activator)

Strontium carbonate (SW-K, SAKAI CHEMICAL INDUSTRY CO., LTD., 23.48 g), europium oxide (Shin-Etsu Chemical Co., Ltd., 0.16 g), holmium oxide (reagent, Wako Pure Chemical Industries, Ltd., 0.10 g), and aluminum oxide (activated alumina RG-40, Iwatani Chemical Industry Co., Ltd., 18.02 g) were added to water (90 mL). Subsequently, in the same manner as in Example 1, the target mechanoluminescent material in the form of powder was obtained.

### Example 9 (mechanoluminescent material containing activated alumina as raw material and holmium as co-activator)

Strontium carbonate (SW-K, SAKAI CHEMICAL INDUSTRY CO., LTD., 23.44 g), europium oxide (Shin-Etsu Chemical Co., Ltd., 0.16 g), holmium oxide (reagent, Wako Pure Chemical Industries, Ltd., 0.17 g), and aluminum oxide (activated alumina RG-40, Iwatani Chemical Industry Co., Ltd., 17.99 g) were added to water (90 mL). Subsequently, in the same manner as in Example 1, the target mechanoluminescent material in the form of powder was obtained.

### Comparative Example 17 (mechanoluminescent material containing activated alumina as raw material and holmium as co-activator)

Strontium carbonate (SW-K, SAKAI CHEMICAL INDUSTRY CO., LTD., 22.59 g), europium oxide (Shin-Etsu Chemical Co., Ltd., 0.15 g), holmium oxide (reagent, Wako Pure Chemical Industries, Ltd., 1.61 g), and aluminum oxide (activated alumina RG-40, Iwatani Chemical Industry Co., Ltd., 17.34 g) were added to water (90 mL). Subsequently, in the same manner as in Example 1, the target mechanoluminescent material in the form of powder was obtained.

**[Table 3]**

| | Amount (mol) of holmium ion per mole of strontium aluminate | Relative mechanoluminescence intensity (%) |
|---|---|---|
| Comparative Example 1 | 0 | 100 |
| Example 7 | 0.001 | 368 |
| Example 3 | 0.002 | 328 |
| Example 8 | 0.003 | 304 |
| Example 9 | 0.005 | 278 |
| Comparative Example 17 | 0.05 | 150 |

### Example 10 (mechanoluminescent material containing highly activated alumina material, which has larger specific surface area than activated alumina, as raw material and neodymium as co-activator)

Strontium carbonate (SW-K, SAKAI CHEMICAL INDUSTRY CO., LTD., 23.23 g), europium oxide (Shin-Etsu Chemical Co., Ltd., 0.31 g), neodymium oxide (reagent, Wako Pure Chemical Industries, Ltd., 0.30 g), and aluminum oxide (highly activated alumina RK-40 (a mixture of boehmite and θ-alumina/η-alumina mixture, α-alumina content: 1 mol%, Iwatani Chemical Industry Co., Ltd.), 17.87 g) were added to water (90 mL) and the components were formed into slurry-like components. Then, the slurry-like components were dispersed, ground, and mixed using a planetary ball mill with the 3-mm-diameter alumina balls (SSA-999W, NIKKATO CORP., 190 g) as grinding media, and thereby slurry was obtained. The resulting slurry was evaporation-dried at 130°C, and the resulting solid matter was crushed on a mortar. Thereby, a raw material composition for a mechanoluminescent material in the form of powder was obtained. Next, 20 g of this composition was charged into an alumina crucible. In a reducing atmosphere (2% hydrogen-containing nitrogen), the temperature was increased up to 1200°C at a rate of 200°C/h, maintained at this temperature for four hours, and then decreased to room temperature at a rate of 200°C/h. The resulting sintered product was ground and granulated in an alcohol solvent using a planetary ball mill, and then the ground product was filtered and dried. Thereby, the target mechanoluminescent material in the form of powder was obtained.

### Example 11 (mechanoluminescent material containing highly activated alumina material as raw material and dysprosium as co-activator)

A mechanoluminescent material in the form of powder was obtained in the same manner as in Example 10 except that the neodymium oxide was replaced by dysprosium acetate tetrahydrate (reagent, Wako Pure Chemical Industries, Ltd., 0.72 g).

### Example 12 (mechanoluminescent material containing highly activated alumina material as raw material and holmium as co-activator)

A mechanoluminescent material in the form of powder was obtained in the same manner as in Example 10 except that the neodymium oxide was replaced by holmium oxide (reagent, Wako Pure Chemical Industries, Ltd., 0.33 g).

### Comparative Example 18 (mechanoluminescent material containing highly activated alumina material as raw material and no co-activator)

Strontium carbonate (SW-K, SAKAI CHEMICAL INDUSTRY CO., LTD., 23.45 g), europium oxide (Shin-Etsu Chemical Co., Ltd., 0.31 g), and aluminum oxide (highly activated alumina RK-40 (a mixture of boehmite and θ-alumina/η-alumina mixture, α-alumina content: 1 mol%, Iwatani Chemical Industry Co., Ltd.), 17.99 g) were added to water (90 mL) and the components were formed into slurry-like components. Then, the slurry-like components were dispersed, ground, and mixed using a planetary ball mill with the 3-mm-diameter alumina balls (SSA-999W, NIKKATO CORP., 190 g) as grinding media, and thereby slurry was obtained. The resulting slurry was evaporation-dried at 130°C, and the resulting solid matter was crushed on a mortar. Thereby, a raw material composition for a mechanoluminescent material in the form of powder was obtained. Next, 20 g of this composition was charged into an alumina crucible. In a reducing atmosphere (2% hydrogen-containing nitrogen), the temperature was increased up to 1200°C at a rate of 200°C/h, maintained at this temperature for four hours, and then decreased to room temperature at a rate of 200°C/h. The resulting sintered product was ground and granulated in an alcohol solvent using a planetary ball mill, and then the ground product was filtered and dried. Thereby, the target mechanoluminescent material in the form of powder was obtained.

### Comparative Example 19 (mechanoluminescent material containing highly activated alumina material as raw material and lanthanum as co-activator)

A mechanoluminescent material in the form of powder was obtained in the same manner as in Example 10 except that the neodymium oxide was replaced by lanthanum oxide (reagent, Wako Pure Chemical Industries, Ltd., 0.290 g).

### Comparative Example 20 (mechanoluminescent material containing highly activated alumina material as raw material and cerium as co-activator)

A mechanoluminescent material in the form of powder was obtained in the same manner as in Example 10 except that the neodymium oxide was replaced by cerium oxide (reagent, Wako Pure Chemical Industries, Ltd., 0.30 g).

### Comparative Example 21 (mechanoluminescent material containing highly activated alumina material as raw material and samarium as co-activator)

A mechanoluminescent material in the form of powder was obtained in the same manner as in Example 10 except that the neodymium oxide was replaced by samarium acetate tetrahydrate (reagent, Wako Pure Chemical Industries, Ltd., 0.700 g).

### Comparative Example 22 (mechanoluminescent material containing highly activated alumina material as raw material and gadolinium as co-activator)

A mechanoluminescent material in the form of powder was obtained in the same manner as in Example 10 except that the neodymium oxide was replaced by gadolinium oxide (reagent, Wako Pure Chemical Industries, Ltd., 0.32 g).

### Comparative Example 23 (mechanoluminescent material containing highly activated alumina material as raw material and terbium as co-activator)

A mechanoluminescent material in the form of powder was obtained in the same manner as in Example 10 except that the neodymium oxide was replaced by terbium oxide (reagent, Wako Pure Chemical Industries, Ltd., 0.33 g).

### Comparative Example 24 (mechanoluminescent material containing highly activated alumina material as raw material and erbium as co-activator)

A mechanoluminescent material in the form of powder was obtained in the same manner as in Example 10 except that the neodymium oxide was replaced by erbium oxide (reagent, Wako Pure Chemical Industries, Ltd., 0.34 g).

### Comparative Example 25 (mechanoluminescent material containing highly activated alumina material as raw material and ytterbium co-activator)

A mechanoluminescent material in the form of powder was obtained in the same manner as in Example 10 except that the neodymium oxide was replaced by ytterbium oxide (reagent, Wako Pure Chemical Industries, Ltd., 0.35 g).

### Example 13 (mechanoluminescent material containing aluminum hydroxide material as raw material and neodymium as co-activator)

A mechanoluminescent material in the form of powder was obtained in the same manner as in Example 10 except that 24.97 g of RH-40 (mixture of bayerite and boehmite, Iwatani Chemical Industry Co., Ltd.) was used instead of aluminum oxide.

### Example 14 (mechanoluminescent material containing aluminum hydroxide material as raw material and dysprosium as co-activator)

A mechanoluminescent material in the form of powder was obtained in the same manner as in Example 11 except that 24.94 g of the aforementioned RH-40 was used instead of aluminum oxide.

### Example 15 (mechanoluminescent material containing aluminum hydroxide material as raw material and holmium as co-activator)

A mechanoluminescent material in the form of powder was obtained in the same manner as in Example 12 except that 24.94 g of the aforementioned RH-40 was used instead of aluminum oxide.

### Comparative Example 26 (mechanoluminescent material containing aluminum hydroxide material as raw material and no co-activator)

A mechanoluminescent material in the form of powder was obtained in the same manner as in Comparative Example 18 except that 25.15 g of the aforementioned RH-40 was used instead of aluminum oxide. The resulting powder was subjected to crystallographic analysis.

### Comparative Example 27 (mechanoluminescent material containing aluminum hydroxide material as raw material and lanthanum as co-activator)

A mechanoluminescent material in the form of powder was obtained in the same manner as in Comparative Example 19 except that 24.98 g of the aforementioned RH-40 was used instead of aluminum oxide.

### Comparative Example 28 (mechanoluminescent material containing aluminum hydroxide material as raw material and cerium as co-activator)

A mechanoluminescent material in the form of powder was obtained in the same manner as in Comparative Example 20 except that 24.98 g of the aforementioned RH-40 was used instead of aluminum oxide.

### Comparative Example 29 (mechanoluminescent material containing aluminum hydroxide material as raw material and samarium as co-activator)

A mechanoluminescent material in the form of powder was obtained in the same manner as in Comparative Example 21 except that 24.96 g of the aforementioned RH-40 was used instead of aluminum oxide.

### Comparative Example 30 (mechanoluminescent material containing aluminum hydroxide material as raw material and gadolinium as co-activator)

A mechanoluminescent material in the form of powder was obtained in the same manner as in Comparative Example 22 except that 24.95 g of the aforementioned RH-40 was used instead of aluminum oxide.

### Comparative Example 31 (mechanoluminescent material containing aluminum hydroxide material as raw material and terbium as co-activator)

A mechanoluminescent material in the form of powder was obtained in the same manner as in Comparative Example 23 except that 24.95 g of the aforementioned RH-40 was used instead of aluminum oxide.

### Comparative Example 32 (mechanoluminescent material containing aluminum hydroxide material as raw material and erbium as co-activator)

A mechanoluminescent material in the form of powder was obtained in the same manner as in Comparative Example 24 except that 24.94 g of the aforementioned RH-40 was used instead of aluminum oxide.

### Comparative Example 33 (mechanoluminescent material containing aluminum hydroxide material as raw material and ytterbium as co-activator)

A mechanoluminescent material in the form of powder was obtained in the same manner as in Comparative Example 25 except that 24.93 g of the aforementioned RH-40 was used instead of aluminum oxide.

The mechanoluminescence performance of each of the mechanoluminescent material powders produced in Examples 10 to 15 and Comparative Examples 18 to 33 was evaluated by the aforementioned method. The results are shown in Table 4. The term "relative mechanoluminescence intensity" in Table 4 is a value that represents a percentage of the mechanoluminescence intensity relative to the value (= 100) of the mechanoluminescent material sample containing no co-activator and α-alumina as a raw material alumina (i.e., Comparative Example 9, see Table 2).

The values in the case of using activated alumina (Examples 1 to 3 and Comparative Examples 1 to 8) shown in Table 4 are different from those shown in Table 1. This is because the values in Table 4 are converted from the measured values in relation to the fact that the standard of the relative mechanoluminescence intensity (= 100%) was changed from Comparative Example 1 to Comparative Example 9. The values in the case of using α-alumina (Examples 4 to 6 and Comparative Examples 9 to 16) are the same as those shown in Table 2.

**[Table 4]**

| Co-activator element | Relative mechanoluminescence intensity (%) | | | |
|---|---|---|---|---|
| | Activated alumina Examples 1 to 3 Comparative Examples 1 to 8 | Highly activated alumina Examples 10 to 12 Comparative Examples 18 to 25 | Aluminum hydroxide Examples 13 to 15 Comparative Examples 26 to 33 | α-Alumina Examples 4 to 6 Comparative Examples 9 to 16 |
| None | 295 | 145 | 136 | 100 |
| La | 380 | 281 | 309 | 200 |
| Ce | 395 | 254 | 271 | 181 |
| Nd | 958 | 842 | 748 | 683 |
| Sm | 63 | 62 | 69 | 22 |
| Gd | 451 | 325 | 339 | 159 |
| Tb | 356 | 219 | 259 | 127 |
| Dy | 1161 | 690 | 778 | 493 |
| Ho | 966 | 659 | 672 | 435 |
| Er | 513 | 358 | 309 | 134 |
| Yb | 87 | 98 | 85 | 69 |

### Reference Examples 1 to 5

A mechanoluminescent material in the form of powder was obtained in the same manner as in Comparative Example 1 except that RA-40 (a-alumina content: 98 mol%, Iwatani Chemical Industry Co., Ltd.) and RG-40 (activated alumina, θ-alumina/η-alumina mixture, α-alumina content: 8 mol%, Iwatani Chemical Industry Co., Ltd.) were used in admixture as aluminum oxide such that the α-alumina content reached the value shown in Table 5.

**[Table 5]**

| | α-Alumina content (mol%) | Relative mechanoluminescence intensity (%) |
|---|---|---|
| Comparative Example 9 | 98 | 100 |
| Reference Example 1 | 90 | 124 |
| Reference Example 2 | 70 | 129 |
| Reference Example 3 | 50 | 168 |
| Reference Example 4 | 30 | 192 |
| Reference Example 5 | 10 | 250 |

Tables 1 to 4 and Figs. 1 and 2 show that the mechanoluminescent material containing Nd, Dy, or Ho as a co-activator exerts a significantly higher mechanoluminescence intensity than those containing other lanthanoid element. Based on the knowledge of prior arts, the lanthanoids and rare-earth elements are not distinguished in general. However, as indicated above, use of Nd, Dy, or Ho in a europium-activated strontium aluminate-based mechanoluminescent material lead to a significantly high mechanoluminescence intensity. This is an effect better than expected from the conventional knowledge. Therefore, the mechanoluminescent material containing Eu as an activator in combination with at least one selected from Nd, Dy, and Ho as a co-activator can exert significant synergistic effects.

Table 4 shows that the mechanoluminescent articles in the respective examples containing activated alumina (mainly θ-alumina and η-alumina) as a raw material had a significantly higher mechanoluminescence intensity than those containing α-alumina as a raw material. In particular, those containing Nd, Dy, or Ho as a co-activator showed a relative mechanoluminescence intensity as high as exceeding 900%.

Table 5 shows that the mechanoluminescence intensity of the mechanoluminescent article tends to increase as the θ-alumina content and the η-alumina content increase and the α-alumina content decreases in comparison with the case of using α-alumina as a raw material.

## Claims

1. A use of a material as a mechanoluminescent material in a mechanoluminescent coating composition, wherein the mechanoluminescent material comprises
strontium aluminate as a base material,
a Eu ion, and
at least one ion selected from the group consisting of Nd, Dy, and Ho,
an amount of the Eu ion contained in the mechanoluminescent material being 0.0001 to 0.01 mol per mole of the strontium aluminate,
an amount of the at least one ion selected from the group consisting of Nd, Dy, and Ho contained in the mechanoluminescent material being, as the sum of amounts of the three ions Nd, Dy, and Ho, 0.0001 to 0.01 mol per mole of the strontium aluminate,
wherein the strontium aluminate is synthesized
- from a strontium source and one or both of aluminum hydroxide and an alumina raw material containing 0-alumina, and η-alumina wherein a content of α-alumina in the one or both of alumina and aluminum hydroxide in the raw material composition is 90 mol% or less.

2. The use of a material as a mechanoluminescent material according to claim 1,
wherein the amount of the Eu ion contained in the mechanoluminescent material is 0.0005 to 0.005 mol per mole of the strontium aluminate, and
the amount of the at least one ion selected from the group consisting of Nd, Dy, and Ho contained in the mechanoluminescent material is, as the sum of the amounts of the three ions Nd, Dy, and Ho, 0.0005 to 0.005 mol per mole of the strontium aluminate.

3. A use of a material as a mechanoluminescent material for a mechanoluminescent article formed from a resin composition comprising the mechanoluminescent material and wherein the mechanoluminescent material comprises
strontium aluminate as a base material,
a Eu ion, and
at least one ion selected from the group consisting of Nd, Dy, and Ho,
an amount of the Eu ion contained in the mechanoluminescent material being 0.0001 to 0.01 mol per mole of the strontium aluminate,
an amount of the at least one ion selected from the group consisting of Nd, Dy, and Ho contained in the mechanoluminescent material being, as the sum of amounts of the three ions Nd, Dy, and Ho, 0.0001 to 0.01 mol per mole of the strontium aluminate,
wherein the strontium aluminate is synthesized
- from a strontium source and one or both of aluminum hydroxide and an alumina raw material containing θ-alumina and η-alumina, wherein a content of α-alumina in the one or both of alumina and aluminum hydroxide in the raw material composition is 90 mol% or less.

4. The use of a material as a mechanoluminescent material according to claim 3,
wherein the amount of the Eu ion contained in the mechanoluminescent material is 0.0005 to 0.005 mol per mole of the strontium aluminate, and
the amount of the at least one ion selected from the group consisting of Nd, Dy, and Ho contained in the mechanoluminescent material is, as the sum of the amounts of the three ions Nd, Dy, and Ho, 0.0005 to 0.005 mol per mole of the strontium aluminate.

## Patentansprüche

1. Verwendung eines Materials als mechanolumineszierendes Material in einer mechanolumineszierenden Beschichtungszusammensetzung, wobei das mechanolumineszierende Material umfasst
Strontiumaluminat als Basismaterial,
ein Eu-Ion und
mindestens ein Ion, ausgewählt aus der aus Nd, Dy und Ho bestehenden Gruppe,
wobei eine Menge des in dem mechanolumineszierenden Material enthaltenen Eu-Ions, die 0,0001 bis 0,01 Mol pro Mol des Strontiumaluminats beträgt,
eine Menge des mindestens einen aus der aus Nd, Dy und Ho bestehenden Gruppe ausgewählten Ions, die in dem mechanolumineszierenden Material enthalten ist, als Summe der Mengen der drei Ionen Nd, Dy und Ho 0,0001 bis 0,01 Mol pro Mol des Strontiumaluminats beträgt,
wobei das Strontiumaluminat synthetisiert ist
- aus einer Strontiumquelle und einem oder beiden von Aluminiumhydroxid und einem Aluminiumoxid-Ausgangsmaterial, das θ-Aluminiumoxid und η-Aluminiumoxid enthält, wobei ein Gehalt an α-Aluminiumoxid in dem einen oder beiden von Aluminiumoxid und Aluminiumhydroxid in der Ausgangsmaterialzusammensetzung 90 Mol-% oder weniger beträgt.

2. Verwendung eines Materials als mechanolumineszierendes Material nach Anspruch 1,
wobei die Menge des in dem mechanolumineszierenden Material enthaltenen Eu-Ions 0,0005 bis 0,005 Mol pro Mol des Strontiumaluminats beträgt, und
die Menge des mindestens einen aus der aus Nd, Dy und Ho bestehenden Gruppe ausgewählten Ions, die in dem mechanolumineszierenden Material enthalten ist, als Summe der Mengen der drei Ionen Nd, Dy und Ho 0,0005 bis 0,005 Mol pro Mol des Strontiumaluminats beträgt.

3. Verwendung eines Materials als mechanolumineszierendes Material für einen mechanolumineszierenden Gegenstand, der aus einer Harzzusammensetzung gebildet ist, die das mechanolumineszierende Material umfasst, und wobei das mechanolumineszierende Material umfasst
Strontiumaluminat als Basismaterial,
ein Eu-Ion und
mindestens ein aus der aus Nd, Dy und Ho bestehenden Gruppe ausgewähltes Ion,
wobei eine Menge des in dem mechanolumineszierenden Material enthaltenen Eu-Ions, 0,0001 bis 0,01 Mol pro Mol des Strontiumaluminats beträgt,
eine Menge des mindestens einen aus der aus Nd, Dy und Ho bestehenden Gruppe ausgewählten Ions, die in dem mechanolumineszierenden Material enthalten ist, als Summe der Mengen der drei Ionen Nd, Dy und Ho 0,0001 bis 0,01 Mol pro Mol des Strontiumaluminats beträgt,
wobei das Strontiumaluminat synthetisiert ist
- aus einer Strontiumquelle und einem oder beiden von Aluminiumhydroxid und einem Aluminiumoxid-Ausgangsmaterial, das θ-Aluminiumoxid und η-Aluminiumoxid enthält, wobei ein Gehalt an α-Aluminiumoxid in dem einen oder beiden von Aluminiumoxid und Aluminiumhydroxid in der Ausgangsmaterialzusammensetzung 90 Mol-% oder weniger beträgt.

4. Verwendung eines Materials als mechanolumineszierendes Material nach Anspruch 3,
wobei die Menge des in dem mechanolumineszierenden Material enthaltenen Eu-Ions 0,0005 bis 0,005 Mol pro Mol des Strontiumaluminats beträgt, und
die Menge des mindestens einen aus der aus Nd, Dy und Ho bestehenden Gruppe ausgewählten Ions, die in dem mechanolumineszierenden Material enthalten ist, als Summe der Mengen der drei Ionen Nd, Dy und Ho 0,0005 bis 0,005 Mol pro Mol des Strontiumaluminats beträgt.

## Revendications

1. Utilisation d'un matériau comme un matériau mécanoluminescent dans une composition de revêtement mécanoluminescent, dans laquelle le matériau mécanoluminescent comprend :
de l'aluminate de strontium comme un matériau de base,
un ion Eu, et
au moins un ion choisi dans le groupe constitué de Nd, Dy, et Ho,
une quantité de l'ion Eu contenu dans le matériau mécanoluminescent étant de 0,0001 à 0,01 mol par mole de l'aluminate de strontium,
une quantité du au moins un ion choisi dans le groupe constitué de Nd, Dy, et Ho contenu dans le matériau mécanoluminescent étant, comme la somme des quantités des trois ions Nd, Dy, et Ho, de 0,0001 à 0,01 mol par mole de l'aluminate de strontium,
dans laquelle l'aluminate de strontium est synthétisé
- à partir d'une source de strontium et d'un ou les deux d'hydroxyde d'aluminium et de matière première d'alumine contenant de l'alumine θ, et de l'alumine η, dans laquelle une teneur en alumine α dans le un ou les deux d'alumine et d'hydroxyde d'aluminium dans la composition de matière première est de 90 % en mol ou inférieure.

2. Utilisation d'un matériau comme un matériau mécanoluminescent selon la revendication 1,
dans laquelle la quantité de l'ion Eu contenu dans le matériau mécanoluminescent est de 0,0005 à 0,005 mol par mole de l'aluminate de strontium, et
la quantité du au moins un ion choisi dans le groupe constitué de Nd, Dy, et Ho contenu dans le matériau mécanoluminescent est, comme la somme des quantités des trois ions Nd, Dy, et Ho, de 0,0005 à 0,005 mol par mole de l'aluminate de strontium.

3. Utilisation d'un matériau mécanoluminescent pour un article mécanoluminescent formé à partir d'une composition de résine comprenant le matériau mécanoluminescent et dans laquelle le matériau mécanoluminescent comprend
de l'aluminate de strontium comme un matériau de base,
un ion Eu, et
au moins un ion choisi dans le groupe constitué de Nd, Dy, et Ho,
une quantité de l'ion Eu contenu dans le matériau mécanoluminescent étant de 0,0001 à 0,01 mol par mole de l'aluminate de strontium,
une quantité du au moins un ion choisi dans le groupe constitué de Nd, Dy, et Ho contenu dans le matériau mécanoluminescent étant, comme la somme des quantités des trois ions Nd, Dy, et Ho, de 0,0001 à 0,01 mol par mole de l'aluminate de strontium,
dans laquelle l'aluminate de strontium est synthétisé
- à partir d'une source de strontium et d'un ou les deux d'hydroxyde d'aluminium et de matière première d'alumine contenant de l'alumine θ et de l'alumine η, dans laquelle une teneur en alumine α dans le un ou les deux d'alumine et d'hydroxyde d'aluminium dans la composition de la matière première est de 90 % en mol ou inférieure.

4. Utilisation d'un matériau comme un matériau mécanoluminescent selon la revendication 3,
dans laquelle la quantité de l'ion Eu contenu dans le matériau mécanoluminescent est 0,0005 à 0,005 mol par mole de l'aluminate de strontium, et
la quantité du au moins un ion choisi dans le groupe constitué de Nd, Dy, et Ho contenu dans le matériau mécanoluminescent est, comme la somme des quantités des trois ions Nd, Dy, et Ho, de 0,0005 à 0,005 mol par mole de l'aluminate de strontium.
